(19) Europäisches Patentamt
European Patent Office
Office européen des brevets

(11) **EP 3 277 043 A1**

(12) **EUROPEAN PATENT APPLICATION**
published in accordance with Art. 153(4) EPC

(43) Date of publication:
**31.01.2018 Bulletin 2018/05**

(51) Int Cl.:
**H04W 74/08** (2009.01)   **H04L 25/08** (2006.01)

(21) Application number: **15889551.6**

(86) International application number:
**PCT/CN2015/077445**

(22) Date of filing: **24.04.2015**

(87) International publication number:
**WO 2016/169062 (27.10.2016 Gazette 2016/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Huawei Technologies Co., Ltd.**
**Longgang District**
**Shenzhen, Guangdong 518129 (CN)**

(72) Inventors:
• **GUO, Zhiheng**
  **Shenzhen**
  **Guangdong 518129 (CN)**
• **DAI, Xizeng**
  **Shenzhen**
  **Guangdong 518129 (CN)**
• **CHENG, Xingqing**
  **Shenzhen**
  **Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **UPLINK RANDOM ACCESS METHOD AND RELATED DEVICE**

(57)   Embodiments of the present invention provide an uplink random access method and a related device, so as to resolve at least a problem in the prior art that a success rate of uplink random access when an uplink frequency offset is relatively large is greatly decreased, thereby improving the success rate of uplink random access when the uplink frequency offset is relatively large. The method includes: determining, by UE, K available root sequences for uplink random access according to a preset policy, where a maximum quantity of detection windows of single UE that can be supported by each of the K available root sequences is 2M+1, and maximum detection windows of the single UE that can be supported by each available root sequence do not overlap with each other, where $K \geq 1$, M is a detection window parameter, M>1, and both K and M are integers; and performing, by the UE, uplink random access according to the $k^{th}$ available root sequence of the K available root sequences, where $1 \leq k \leq K$ and k is an integer. The present invention is applicable to the field of wireless communications.

UE determines K available root sequences for uplink random access according to a preset policy, where a maximum quantity of detection windows of single UE that can be supported by each of the K available root sequences is 2M+1, and maximum detection windows of the single user that can be supported by each available root sequence do not overlap with each other — 101

The UE performs uplink random access according to the $k^{th}$ available root sequence of the K available root sequences — 102

FIG. 1

EP 3 277 043 A1

**Description**

**TECHNICAL FIELD**

The present invention relates to the field of wireless communications, and in particular, to an uplink random access method and a related device.

**BACKGROUND**

Generally, when user equipment (User Equipment, UE for short) performs uplink random access, the UE first performs, in a downlink direction, frequency synchronization with a base station. Due to the existence of an Doppler frequency offset, the UE is frequency locked on $f + \Delta f$, where $\Delta f = f \times v/c$, $f$ is a frequency at which the base station sends a carrier, $\Delta f$ is a Doppler frequency offset, $v$ is a carrier frequency, and $c = 3 \times 10^8 m/s$. Therefore, when the UE sends an uplink random access signal, a frequency at which the UE sends a carrier is $f + \Delta f$. In consideration of a case in which another Doppler frequency offset is introduced due to movement of the UE in a process in which the uplink random access signal is propagated over the air, a frequency of the uplink random access signal that is sent by the UE and that is received by the base station is $f + 2\Delta f$, that is, a frequency offset of $2\Delta f$ is generally introduced to a random access signal that is sent by the UE and that is received by the base station. Although in the prior art, in a design of a physical random access channel (Physical Random Access Channel, PRACH for short) in a Long Term Evolution (Long Time Evolution, LTE for short) system, a targeted design is made for a frequency offset problem of high-speed moving UE, the targeted design is generally applicable only to a relatively small frequency offset.

As wireless communications requirements continuously grow, users have increasingly high requirements on rates. Therefore, a larger bandwidth is required, and further, communication needs to be performed at a higher frequency. For example, communication needs to be performed at 5 GHz (hertz) or a frequency that is higher than 5 GHz. According to the foregoing Doppler frequency offset formula, a larger frequency offset is introduced. When the frequency offset is greater than a particular value, correlation peaks occur at multiple detection window locations after a local access sequence of the base station is correlated to a received access sequence of the base station. Because the targeted design in the prior art is generally applicable only to a relatively small frequency offset, when peaks occur at more detection windows, the base station considers that another UE performs access by using a different access sequence, leading to error detection on an uplink random access sequence, or a decrease in low estimation accuracy of a time delay of arrival of a received sequence. Consequently, a success rate of uplink random access by the UE is greatly decreased.

**SUMMARY**

Embodiments of the present invention provide an uplink random access method, so as to resolve at least a problem in the prior art that a success rate of uplink random access when an uplink frequency offset is relatively large is greatly decreased, thereby improving the success rate of uplink random access when the uplink frequency offset is relatively large.

To achieve the foregoing objective, the following technical solutions are used in the embodiments of the present invention.

According to a first aspect, an uplink random access method is provided, where the method includes:

determining, by user equipment UE, K available root sequences for uplink random access according to a preset policy, where a maximum quantity of detection windows of single UE that can be supported by each of the K available root sequences is 2M+1, and maximum detection windows of the single UE that can be supported by each available root sequence do not overlap with each other, where K≥1, M is a detection window parameter, M>1, and both K and M are integers; and

performing, by the UE, uplink random access according to the k$^{th}$ available root sequence of the K available root sequences, where 1≤k≤K and k is an integer.

With reference to the first aspect, in a first possible implementation of the first aspect, the preset policy includes:

a root sequence satisfying none of the following condition A, condition B, and condition C is an available root sequence:

the condition A: any detection window $m \in \{-M,...,0,...,M\}$ of the single UE satisfies:

$$(m \times d_u + N_{CS} - 1) \bmod N_{ZC} < (m \times d_u) \bmod N_{ZC};$$

the condition B: any detection windows $m_a$ and $m_b$ of the single UE, where $m_a \neq m_b$ and $m_a, m_b \in \{-M,...,0,...,M\}$, satisfy:

$$(m_a \times d_u) \bmod N_{ZC} \leq (m_b \times d_u) \bmod N_{ZC},$$

and

$$(m_a \times d_u + N_{CS} - 1) \bmod N_{ZC} \geq (m_b \times d_u) \bmod N_{ZC};$$

and
the condition C: any detection windows $m_a$ and $m_b$ of the single UE, where $m_a \neq m_b$ and $m_a, m_b \in \{-M,...,0,...,M\}$, satisfy:

$$(m_b \times d_u + N_{CS} - 1) \bmod N_{ZC} \geq (m_a \times d_u) \bmod N_{ZC},$$

and

$$(m_b \times d_u + N_{CS} - 1) \bmod N_{ZC} \leq (m_a \times d_u + N_{CS} - 1) \bmod N_{ZC},$$

where

$$d_u = \begin{cases} p & 0 \leq p \leq N_{ZC}/2 \\ N_{ZC} - p & \text{others} \end{cases};$$

$p$ is a minimum non-negative integer satisfying $(p \times u) \bmod N_{ZC} = 1$; $u$ indicates a root sequence generation parameter; a root sequence is $x_u(n) = e^{\frac{-jun(n+1)}{N_{ZC}}}$; $d_u$ indicates an offset of a peak generated when a subcarrier is shifted; $N_{ZC}$ indicates a length of an uplink access root sequence; $N_{CS}$ indicates a length of an uplink detection window; 2M+1 indicates the maximum quantity of detection windows of the single UE that can be supported by the available root sequence; $m$, $m_a$, and $m_b$ indicate any detection windows of the single UE; and mod indicates a modulo operation.

With reference to the first aspect or the first possible implementation of the first aspect, in a second possible implementation of the first aspect, after the determining, by UE, K available root sequences for uplink random access according to a preset policy, the method further includes:

determining, by the UE, start locations of cyclic shift sequences of the K available root sequences, where the start locations of the cyclic shift sequences of the K available root sequences include start locations of N cyclic shift sequences of the $k^{th}$ available root sequence, the start locations of the N cyclic shift sequences include a start location of the $n^{th}$ cyclic shift sequence, and
$N \times (2M+1)$ detection windows corresponding to the start locations of the N cyclic shift sequences do not overlap with each other, where $1 \leq n \leq N$, $N \geq 1$, N indicates a quantity of cyclic shift sequences of the $k^{th}$ available root sequence, and both n and N are integers; and
performing, by the UE, cyclic shift on the $k^{th}$ available root sequence according to the start location of the $n^{th}$ cyclic shift sequence, to obtain the $n^{th}$ cyclic shift sequence of the $k^{th}$ available root sequence, where magnitude of the cyclic shift is $(d_{start,n} + a) \bmod N_{ZC}$; $d_{start,n}$ is the start location of the $n^{th}$ cyclic shift sequence; $N_{ZC}$ indicates a length of an uplink access root sequence; mod indicates a modulo operation; and $a$ is a preset integer value; and

the performing, by the UE, uplink random access according to the $k^{th}$ available root sequence of the K available root sequences includes:

> performing, by the UE, uplink random access according to the $k^{th}$ available root sequence of the K available root sequences or the $n^{th}$ cyclic shift sequence of the $k^{th}$ available root sequence.

With reference to the second possible implementation of the first aspect, in a third possible implementation of the first aspect, *a* is prestored by the UE or is sent by the base station to the UE.

With reference to the second possible implementation of the first aspect or the third possible implementation of the first aspect, in a fourth possible implementation of the first aspect, the start location of the $n^{th}$ cyclic shift sequence is obtained through calculation by using the following steps:

> obtaining, by the UE, a start location of a detection window of the $n^{th}$ cyclic shift sequence according to a first formula, where the first formula includes:

$$d_{start,n1} = (d_{start,n} + m \times d_u) \mod N_{ZC} ;$$

> obtaining, by the UE, an end location of the detection window of the $n^{th}$ cyclic shift sequence according to a second formula, where the second formula includes:

$$d_{start,n2} = (d_{start,n} + m \times d_u + N_{CS} - 1) \mod N_{ZC} ,$$

where

$$d_{start,1} = 0 ; \quad d_{start,n} = d_{start,n-1} + N_{CS} ; \quad d_u = \{ \begin{array}{ll} p & 0 \le p \le N_{ZC}/2 \\ N_{ZC} - p & \text{others} \end{array} ;$$

P is a minimum non-negative integer satisfying $(p \times u) \mod N_{ZC} = 1$; $d_u$ indicates an offset of a peak generated when a subcarrier is shifted; $N_{ZC}$ indicates a length of an uplink access root sequence; $N_{CS}$ indicates a length of an uplink detection window; $d_{start,n1}$ indicates the start location of the detection window of the $n^{th}$ cyclic shift sequence; and $d_{start,n2}$ indicates the end location of the detection window of the $n^{th}$ cyclic shift sequence;

determining, by the UE for any $d_{start,l} \in v$, whether a detection window corresponding to $d_{start,n}$ and a detection window corresponding to $d_{start,l}$ overlap, where $v$ indicates a set of start locations of detection windows, and an initial set of $v$ is $v = \{d_{start,1}\}$;

if the detection window corresponding to $d_{start,n}$ and the detection window corresponding to $d_{start,l}$ do not overlap, determining, by the UE, that the start location of the $n^{th}$ cyclic shift sequence is $d_{start,n}$ and adding $d_{start,n}$ to $v$; and

if the detection window corresponding to $d_{start,n}$ and the detection window corresponding to $d_{start,l}$ overlap, assuming $d_{start,n} = d_{start,n} + 1$ and repeatedly performing, by the UE, the foregoing steps until $d_{start,n} \ge N_{ZC} - N_{CS}$.

With reference to the fourth possible implementation of the first aspect, in a fifth possible implementation of the first aspect, a configuration parameter is prestored by the UE or is sent by the base station to the UE, where the configuration parameter includes at least one of the following parameters: M, $N_{ZC}$, or $N_{CS}$.

With reference to any one of the first aspect to the fifth possible implementation of the first aspect, in a sixth possible implementation of the first aspect, before the performing, by the UE, uplink random access according to the $k^{th}$ available root sequence of the K available root sequences, the method further includes:

> receiving, by the UE, a physical random access channel PRACH time-frequency resource sent by the base station, where the PRACH time-frequency resource and a PRACH time-frequency resource that is configured by the base station for the UE when M=1 are configured independently; and

the performing, by the UE, uplink random access according to the $k^{th}$ available root sequence of the K available root sequences includes:

> performing, by the UE, uplink random access on the PRACH according to the $k^{th}$ available root sequence of the K available root sequences.

With reference to any one of the first aspect to the sixth possible implementation of the first aspect, in a seventh possible implementation of the first aspect, after the determining, by UE, K available root sequences for uplink random access according to a preset policy and before the performing, by the UE, uplink random access according to the k$^{th}$ available root sequence of the K available root sequences, the method further includes:

receiving, by the UE, a sequence number of an initial sequence and a quantity Q of random access sequences supported by a cellular that are sent by the base station, where Q≥1 and Q is an integer; and
determining, by the UE, an initial available root sequence in the K available root sequences according to the sequence number; and
the performing, by the UE, uplink random access according to the k$^{th}$ available root sequence of the K available root sequences includes:

performing, by the UE, uplink random access according to the initial available root sequence or any available root sequence of Q-1 available sequences after the initial available root sequence.

According to a second aspect, user equipment UE is provided, where the UE includes: a determining unit and an access unit, where
the determining unit is configured to determine K available root sequences for uplink random access according to a preset policy, where a maximum quantity of detection windows of single UE that can be supported by each of the K available root sequences is 2M+1, and maximum detection windows of the single UE that can be supported by each available root sequence do not overlap with each other, where K≥1, M is a detection window parameter, M>1, and both K and M are integers; and
the access unit is configured to perform uplink random access according to the k$^{th}$ available root sequence of the K available root sequences, where 1≤k≤K and k is an integer.
With reference to the second aspect, in a first possible implementation of the second aspect, the preset policy includes:

a root sequence satisfying none of the following condition A, condition B, and condition C is an available root sequence:

the condition A: any detection window $m \in \{-M,...,0,...,M\}$ of the single UE satisfies:

$$(m \times d_u + N_{CS} - 1) \bmod N_{ZC} < (m \times d_u) \bmod N_{ZC} ;$$

the condition B: any detection windows $m_a$ and $m_b$ of the single UE, where $m_a \neq m_b$ and $m_a, m_b \in \{-M,...,0,...,M\}$, satisfy:

$$(m_a \times d_u) \bmod N_{ZC} \leq (m_b \times d_u) \bmod N_{ZC} ,$$

and

$$(m_a \times d_u + N_{CS} - 1) \bmod N_{ZC} \geq (m_b \times d_u) \bmod N_{ZC} ;$$

and
the condition C: any detection windows $m_a$ and $m_b$ of the single UE, where $m_a \neq m_b$ and $m_a, m_b \in \{-M,...,0,...,M\}$, satisfy:

$$(m_b \times d_u + N_{CS} - 1) \bmod N_{ZC} \geq (m_a \times d_u) \bmod N_{ZC} ,$$

and

$$(m_b \times d_u + N_{CS} - 1) \bmod N_{ZC} \le (m_a \times d_u + N_{CS} - 1) \bmod N_{ZC}$$,

where

$$d_u = \{ \begin{array}{ll} p & 0 \le p \le N_{ZC}/2 \\ N_{ZC} - p & \text{others} \end{array}$$,

$p$ is a minimum non-negative integer satisfying $(p \times u) \bmod N_{ZC} = 1$; $u$ indicates a root sequence generation parameter; a root sequence is $x_u(n) = e^{\frac{-jun(n+1)}{N_{ZC}}}$; $d_u$ indicates an offset of a peak generated when a subcarrier is shifted; $N_{ZC}$ indicates a length of an uplink access root sequence; $N_{CS}$ indicates a length of an uplink detection window; 2M+1 indicates the maximum quantity of detection windows of the single UE that can be supported by the available root sequence; $m$, $m_a$, and $m_b$ indicate any detection windows of the single UE; and mod indicates a modulo operation.

With reference to the second aspect or the first possible implementation of the second aspect, in a second possible implementation of the second aspect, the UE further includes a generation unit, where
the determining unit is further configured to: after determining the K available root sequences for uplink random access according to the preset policy, determine start locations of cyclic shift sequences of the K available root sequences, where the start locations of the cyclic shift sequences of the K available root sequences include start locations of N cyclic shift sequences of the kth available root sequence, the start locations of the N cyclic shift sequences include a start location of the nth cyclic shift sequence, and N× (2M+1) detection windows corresponding to the start locations of the N cyclic shift sequences do not overlap with each other, where 1≤n≤N, N≥1, N indicates a quantity of cyclic shift sequences of the kth available root sequence, and both n and N are integers;
the generation unit is configured to perform cyclic shift on the kth available root sequence according to the start location of the nth cyclic shift sequence, to obtain the nth cyclic shift sequence of the kth available root sequence, where magnitude of the cyclic shift is $(d_{start,n} + a) \bmod N_{ZC}$; $d_{start,n}$ is the start location of the nth cyclic shift sequence; $N_{ZC}$ indicates a length of an uplink access root sequence; mod indicates a modulo operation; and $a$ is a preset integer value; and
the access unit is specifically configured to:

perform uplink random access according to the kth available root sequence of the K available root sequences or the nth cyclic shift sequence of the kth available root sequence.

With reference to the second possible implementation of the second aspect, in a third possible implementation of the second aspect, $a$ is prestored by the UE or is sent by the base station to the UE.
With reference to the second possible implementation of the second aspect or the third possible implementation of the second aspect, in a fourth possible implementation of the second aspect, the determining unit is specifically configured to:

obtain a start location of a detection window of the nth cyclic shift sequence according to a first formula, where the first formula includes:

$$d_{start,n1} = (d_{start,n} + m \times d_u) \bmod N_{ZC}$$;

obtain an end location of the detection window of the nth cyclic shift sequence according to a second formula, where the second formula includes:

$$d_{start,n2} = (d_{start,n} + m \times d_u + N_{CS} - 1) \bmod N_{ZC}$$,

where

$$d_{start,1} = 0 ; \quad d_{start,n} = d_{start,n-1} + N_{CS} ; \quad d_u = \{ \begin{array}{ll} p & 0 \le p \le N_{ZC}/2 \\ N_{ZC} - p & \text{others} \end{array} ;$$

P is a minimum non-negative integer satisfying $(p \times u) \bmod N_{ZC} = 1$; $d_u$ indicates an offset of a peak generated when a subcarrier is shifted; $N_{ZC}$ indicates a length of an uplink access root sequence; $N_{CS}$ indicates a length of an uplink detection window; $d_{start,n1}$ indicates the start location of the detection window of the $n^{th}$ cyclic shift sequence; and $d_{start,n2}$ indicates the end location of the detection window of the $n^{th}$ cyclic shift sequence;

determine, for any $d_{start,l} \in v$, whether a detection window corresponding to $d_{start,n}$ and a detection window corresponding to $d_{start,l}$ overlap, where $v$ indicates a set of start locations of detection windows, and an initial set of $v$ is $v = \{d_{start,1}\}$;

if the detection window corresponding to $d_{start,n}$ and the detection window corresponding to $d_{start,l}$ do not overlap, determine that the start location of the $n^{th}$ cyclic shift sequence is $d_{start,n}$ and add $d_{start,n}$ to $v$; and

if the detection window corresponding to $d_{start,n}$ and the detection window corresponding to $d_{start,l}$ overlap, assume $d_{start,n} = d_{start,n} + 1$ and repeatedly perform the foregoing steps until $d_{start,n} \ge N_{ZC} - N_{CS}$.

With reference to the fourth possible implementation of the second aspect, in a fifth possible implementation of the second aspect, a configuration parameter is prestored by the UE or is sent by the base station to the UE, where the configuration parameter includes at least one of the following parameters: M, $N_{ZC}$, or $N_{CS}$.

With reference to any one of the second aspect to the fifth possible implementation of the second aspect, in a sixth possible implementation of the second aspect, the UE further includes a receiving unit, where

the receiving unit is configured to: before the access unit performs uplink random access according to the $k^{th}$ available root sequence of the K available root sequences, receive a physical random access channel PRACH time-frequency resource sent by the base station, where the PRACH time-frequency resource and a PRACH time-frequency resource that is configured by the base station for the UE when M=1 are configured independently; and

the access unit is specifically configured to:

perform uplink random access on the PRACH according to the $k^{th}$ available root sequence of the K available root sequences.

With reference to any one of the second aspect to the sixth possible implementation of the second aspect, in a seventh possible implementation of the second aspect, the UE further includes a receiving unit, where

the receiving unit is configured to: after the determining unit determines the K available root sequences for uplink random access according to the preset policy and before the access unit performs uplink random access according to the $k^{th}$ available root sequence of the K available root sequences, receive a sequence number of an initial sequence and a quantity Q of random access sequences supported by a cellular that are sent by the base station, where $Q \ge 1$ and Q is an integer;

the determining unit is further configured to determine an initial available root sequence in the K available root sequences according to the sequence number; and

the access unit is specifically configured to:

perform uplink random access according to the initial available root sequence or any available root sequence of Q-1 available sequences after the initial available root sequence.

Based on the uplink random access method and the UE that are provided in the embodiments of the present invention, in the embodiments of the present invention, a maximum quantity of detection windows of single UE that can be supported by each available root sequence for uplink random access and that is determined by the UE according to a preset policy is 2M+1, where M>1. That is, the maximum quantity of detection windows of the single UE that can be supported by each available root sequence for uplink random access and that is determined by the UE is at least five, and maximum detection windows that can be supported by each available root sequence do not overlap with each other, thereby avoiding a problem in the prior art that a success rate of uplink random access by UE is greatly decreased because a targeted design is generally applicable only to a relatively small frequency offset, for example, a maximum quantity of detection windows that can be supported by an available root sequence for uplink random access is three; when the frequency offset is greater than a particular value, correlation peaks occur at multiple detection window locations after a local access sequence is correlated to a received access sequence, but a base station accesses the UE with a relatively large success rate when peaks occur at a maximum of three detection windows. In the embodiments of the present invention, the UE determines K available root sequences for uplink random access, where the maximum quantity of detection windows of the single UE that can be supported by each of the K available root sequences becomes larger. Therefore, when a frequency offset is greater than a particular value, and when correlation peaks occur at multiple locations after a local access sequence is correlated to a received access sequence, a base station can access the UE with a relatively large success rate when peaks occur at more detection windows, thereby improving a success rate of uplink random access when an uplink frequency offset is relatively large.

According to a third aspect, an uplink random access method is provided, where the method includes:

determining, by a base station, K available root sequences for uplink random access according to a preset policy, where a maximum quantity of detection windows of single UE that can be supported by each of the K available root sequences is 2M+1, and maximum detection windows of the single UE that can be supported by each available root sequence do not overlap with each other, where $K \geq 1$, M is a detection window parameter, M>1, and both K and M are integers; and

performing, by the base station, uplink random access detection according to the $k^{th}$ available root sequence of the K available root sequences, where $1 \leq k \leq K$ and k is an integer.

With reference to the third aspect, in a first possible implementation of the third aspect, the preset policy includes:

a root sequence satisfying none of the following condition A, condition B, and condition C is an available root sequence:

the condition A: any detection window $m \in \{-M,...,0,...,M\}$ of the single UE satisfies:

$$(m \times d_u + N_{CS} - 1) \bmod N_{ZC} < (m \times d_u) \bmod N_{ZC} ;$$

the condition B: any detection windows $m_a$ and $m_b$ of the single UE, where $m_a \neq m_b$ and $m_a, m_b \in \{-M,...,0,...,M\}$, satisfy:

$$(m_a \times d_u) \bmod N_{ZC} \leq (m_b \times d_u) \bmod N_{ZC} ,$$

and

$$(m_a \times d_u + N_{CS} - 1) \bmod N_{ZC} \geq (m_b \times d_u) \bmod N_{ZC} ;$$

and

the condition C: any detection windows $m_a$ and $m_b$ of the single UE, where $ma \neq m_b$ and $m_a, m_b \in \{-M,...,0,...,M\}$, satisfy:

$$(m_b \times d_u + N_{CS} - 1) \bmod N_{ZC} \geq (m_a \times d_u) \bmod N_{ZC} ,$$

and

$$(m_b \times d_u + N_{CS} - 1) \bmod N_{ZC} \leq (m_a \times d_u + N_{CS} - 1) \bmod N_{ZC} ,$$

where

$$d_u = \begin{cases} p & 0 \leq p \leq N_{ZC}/2 \\ N_{ZC} - p & \text{others} \end{cases} ;$$

$p$ is a minimum non-negative integer satisfying $(p \times u) \bmod N_{ZC} = 1$ ; $u$ indicates a root sequence generation parameter; a root sequence is $x_u(n) = e^{\frac{-jun(n+1)}{N_{ZC}}}$ ; $d_u$ indicates an offset of a peak generated when a subcarrier is shifted; $N_{ZC}$ indicates a length of an uplink access root sequence; $N_{CS}$ indicates a length of an uplink detection window; 2M+1 indicates the maximum quantity of detection windows of the single UE that can be supported by the available root sequence; $m$, $m_a$, and $m_b$ indicate any detection windows of the single UE; and mod indicates a modulo operation.

With reference to the third aspect or the first possible implementation of the third aspect, in a second possible implementation of the third aspect, after the determining, by a base station, K available root sequences for uplink random access according to a preset policy, the method further includes:

determining, by the base station, start locations of cyclic shift sequences of the K available root sequences, where the start locations of the cyclic shift sequences of the K available root sequences include start locations of N cyclic shift sequences of the $k^{th}$ available root sequence, the start locations of the N cyclic shift sequences include a start location of the $n^{th}$ cyclic shift sequence, and N× (2M+1) detection windows corresponding to the start locations of the N cyclic shift sequences do not overlap with each other, where 1≤n≤N, N≥1, N indicates a quantity of cyclic shift sequences of the $k^{th}$ available root sequence, and both n and N are integers; and
performing, by the base station, cyclic shift on the $k^{th}$ available root sequence according to the start location of the $n^{th}$ cyclic shift sequence, to obtain the $n^{th}$ cyclic shift sequence of the $k^{th}$ available root sequence, where magnitude of the cyclic shift is $(d_{start,n} + a)$ mod $N_{ZC}$; $d_{start,n}$ is the start location of the $n^{th}$ cyclic shift sequence; $N_{ZC}$ indicates a length of an uplink access root sequence; mod indicates a modulo operation; and $a$ is a preset integer value; and the performing, by the base station, uplink random access detection according to the $k^{th}$ available root sequence of the K available root sequences includes:

performing, by the base station, uplink random access detection according to the $k^{th}$ available root sequence of the K available root sequences or the $n^{th}$ cyclic shift sequence of the $k^{th}$ available root sequence.

With reference to the second possible implementation of the third aspect, in a third possible implementation of the third aspect, the start location of the $n^{th}$ cyclic shift sequence is obtained through calculation by using the following steps:

obtaining, by the UE, a start location of a detection window of the $n^{th}$ cyclic shift sequence according to a first formula, where the first formula includes:

$$d_{start,n1} = (d_{start,n} + m \times d_u) \bmod N_{ZC} ;$$

obtaining, by the UE, an end location of the detection window of the $n^{th}$ cyclic shift sequence according to a second formula, where the second formula includes:

$$d_{start,n2} = (d_{start,n} + m \times d_u + N_{CS} - 1) \bmod N_{ZC} ,$$

where

$$d_{start,1} = 0 ; \quad d_{start,n} = d_{start,n-1} + N_{CS} ; \quad d_u = \begin{cases} p & 0 \leq p \leq N_{ZC}/2 \\ N_{ZC} - p & \text{others} \end{cases} ;$$

$p$ is a minimum non-negative integer satisfying $(p \times u)$ mod $N_{ZC}$ = 1 ; $d_u$ indicates an offset of a peak generated when a subcarrier is shifted; $N_{ZC}$ indicates a length of an uplink access root sequence; $N_{CS}$ indicates a length of an uplink detection window; $d_{start,n,1}$ indicates the start location of the detection window of the $n^{th}$ cyclic shift sequence; and $d_{start,n,2}$ indicates the end location of the detection window of the $n^{th}$ cyclic shift sequence;
determining, by the UE for any $d_{start,l} \in v$ , whether a detection window corresponding to $d_{start,n}$ and a detection window corresponding to $d_{start,l}$ overlap, where $v$ indicates a set of start locations of detection windows, and an initial set of $v$ is $v = \{d_{start,1}\}$ ;

if the detection window corresponding to $d_{start,n}$ and the detection window corresponding to $d_{start,l}$ do not overlap, determining, by the UE, that the start location of the $n^{th}$ cyclic shift sequence is $d_{start,n}$ and adding $d_{start,n}$ to $v$ ; and

if the detection window corresponding to $d_{start,n}$ and the detection window corresponding to $d_{start,l}$ overlap, assuming $d_{start,n} = d_{start,n} +1$ and repeatedly performing, by the UE, the foregoing steps until $d_{start_n}, \geq N_{ZC} - N_{CS}$.

With reference to any one of the third aspect to the third possible implementation of the third aspect, in a fourth possible implementation of the third aspect, before the performing, by the base station, uplink random access detection according to the $k^{th}$ available root sequence of the K available root sequences, the method further includes:

sending, by the base station, a physical random access channel PRACH time-frequency resource to user equipment UE, where the PRACH time-frequency resource and a PRACH time-frequency resource that is configured by the base station for the UE when M=1 are configured independently; and

the performing, by the base station, uplink random access detection according to the $k^{th}$ available root sequence of the K available root sequences includes:

performing, by the base station, uplink random access detection on the PRACH according to the $k^{th}$ available root sequence of the K available root sequences.

With reference to any one of the third aspect to the fourth possible implementation of the third aspect, in a fifth possible implementation of the third aspect, after the determining, by a base station, K available root sequences for uplink random access according to a preset policy and before the performing, by the base station, uplink random access detection according to the $k^{th}$ available root sequence of the K available root sequences, the method further includes:

sending, by the base station, a sequence number of an initial sequence and a quantity Q of random access sequences supported by a cellular to the UE, where Q≥1 and Q is an integer; and

determining, by the base station, an initial available root sequence in the K available root sequences according to the sequence number; and

the performing, by the base station, uplink random access detection according to the $k^{th}$ available root sequence of the K available root sequences includes:

performing, by the base station, uplink random access detection according to the initial available root sequence or any one of Q-1 available root sequences after the initial available root sequence.

With reference to any one of the third aspect to the fourth possible implementation of the third aspect, in a sixth possible implementation of the third aspect, after the determining, by a base station, K available root sequences for uplink random access according to a preset policy and before the performing, by the base station, uplink random access detection according to the $k^{th}$ available root sequence of the K available root sequences, the method further includes:

determining, by the base station, whether Q consecutive available root sequences exist in the K available root sequences, where Q is a quantity of random access sequences supported by a cellular, 1≤Q≤K, and Q is an integer; and

if the Q consecutive available root sequences exist, sending, by the base station, a sequence number of an initial available root sequence and a configuration message to the UE, where the sequence number of the initial available root sequence is a sequence number of the first available root sequence of the Q consecutive available root sequences, and the configuration message is used to indicate that $N_{CS}$ supports a non-limited set and $N_{CS}$ is configured to 0, where $N_{CS}$ indicates a length of an uplink detection window.

According to a fourth aspect, a base station is provided, where the base station includes: a determining unit and a detection unit, where

the determining unit is configured to determine K available root sequences for uplink random access according to a preset policy, where a maximum quantity of detection windows of single UE that can be supported by each of the K available root sequences is 2M+1, and maximum detection windows of the single UE that can be supported by each available root sequence do not overlap with each other, where K≥1, M is a detection window parameter, M>1, and both K and M are integers; and

the detection unit is configured to perform uplink random access detection according to the $k^{th}$ available root sequence of the K available root sequences, where 1≤k≤K and k is an integer.

With reference to the fourth aspect, in a first possible implementation of the fourth aspect, the preset policy includes:

a root sequence satisfying none of the following condition A, condition B, and condition C is an available root sequence:

the condition A: any detection window $m \in \{-M,...,0,...,M\}$ of the single UE satisfies:

$$(m \times d_u + N_{CS} - 1) \bmod N_{ZC} < (m \times d_u) \bmod N_{ZC} ;$$

the condition B: any detection windows $m_a$ and $m_b$ of the single UE, where $m_a \neq m_b$ and $m_a, m_b \in \{-M,...,0,...,M\}$, satisfy:

$$(m_a \times d_u) \bmod N_{ZC} \le (m_b \times d_u) \bmod N_{ZC} ,$$

and

$$(m_a \times d_u + N_{CS} - 1) \bmod N_{ZC} \ge (m_b \times d_u) \bmod N_{ZC} ;$$

and
the condition C: any detection windows $m_a$ and $m_b$ of the single UE, where $m_a \neq m_b$ and $m_a, m_b \in \{-M,...,0,...,M\}$, satisfy:

$$(m_b \times d_u + N_{CS} - 1) \bmod N_{ZC} \ge (m_a \times d_u) \bmod N_{ZC} ,$$

and

$$(m_b \times d_u + N_{CS} - 1) \bmod N_{ZC} \le (m_a \times d_u + N_{CS} - 1) \bmod N_{ZC} ,$$

where

$$d_u = \{ \begin{array}{ll} p & 0 \le p \le N_{ZC}/2 \\ N_{ZC} - p & \text{others} \end{array} ;$$

$p$ is a minimum non-negative integer satisfying $(p \times u) \bmod N_{ZC} = 1$; $u$ indicates a root sequence generation parameter; a root sequence is $x_u(n) = e^{\frac{-jun(n+1)}{N_{ZC}}}$; $d_u$ indicates an offset of a peak generated when a subcarrier is shifted; $N_{ZC}$ indicates a length of an uplink access root sequence; $N_{CS}$ indicates a length of an uplink detection window; 2M+1 indicates the maximum quantity of detection windows of the single UE that can be supported by the available root sequence; $m$, $m_a$, and $m_b$ indicate any detection windows of the single UE; and mod indicates a modulo operation.

With reference to the fourth aspect or the first possible implementation of the fourth aspect, in a second possible implementation of the fourth aspect, the base station further includes a generation unit, where
the determining unit is further configured to: after determining the K available root sequences for uplink random access according to the preset policy, determine start locations of cyclic shift sequences of the K available root sequences, where the start locations of the cyclic shift sequences of the K available root sequences include start locations of N cyclic shift sequences of the $k^{th}$ available root sequence, the start locations of the N cyclic shift sequences include a start location of the $n^{th}$ cyclic shift sequence, and N× (2M+1) detection windows corresponding to the start locations of the N cyclic shift sequences do not overlap with each other, where $1 \le n \le N$, $N \ge 1$, N indicates a quantity of cyclic shift sequences

of the k<sup>th</sup> available root sequence, and both n and N are integers;
the generation unit is configured to perform cyclic shift on the k<sup>th</sup> available root sequence according to the start location of the n<sup>th</sup> cyclic shift sequence, to obtain the n<sup>th</sup> cyclic shift sequence of the k<sup>th</sup> available root sequence, where magnitude of the cyclic shift is $(d_{start,n}+a) \bmod N_{ZC}$; $d_{start,n}$ is the start location of the n<sup>th</sup> cyclic shift sequence; $N_{ZC}$ indicates a length of an uplink access root sequence; mod indicates a modulo operation; and $a$ is a preset integer value; and the detection unit is specifically configured to:

perform uplink random access detection according to the k<sup>th</sup> available root sequence of the K available root sequences or the n<sup>th</sup> cyclic shift sequence of the k<sup>th</sup> available root sequence.

With reference to the second possible implementation of the fourth aspect, in a third possible implementation of the fourth aspect, the determining unit is specifically configured to:

obtain a start location of a detection window of the n<sup>th</sup> cyclic shift sequence according to a first formula, where the first formula includes:

$$d_{start,n1} = (d_{start,n} + m \times d_u) \bmod N_{ZC};$$

obtain an end location of the detection window of the n<sup>th</sup> cyclic shift sequence according to a second formula, where the second formula includes:

$$d_{start,n2} = (d_{start,n} + m \times d_u + N_{CS} - 1) \bmod N_{ZC},$$

where

$$d_{start,1} = 0; \quad d_{start,n} = d_{start,n-1} + N_{CS}; \quad d_u = \{ \begin{matrix} p & 0 \le p \le N_{ZC}/2 \\ N_{ZC} - p & \text{others} \end{matrix};$$

P is a minimum non-negative integer satisfying $(p \times u) \bmod N_{ZC} = 1$; $d_u$ indicates an offset of a peak generated when a subcarrier is shifted; $N_{ZC}$ indicates a length of an uplink access root sequence; $N_{CS}$ indicates a length of an uplink detection window; $d_{start,n1}$ indicates the start location of the detection window of the n<sup>th</sup> cyclic shift sequence; and $d_{start,n2}$ indicates the end location of the detection window of the n<sup>th</sup> cyclic shift sequence;
determine, for any $d_{start,l} \in v$, whether a detection window corresponding to $d_{start,n}$ and a detection window corresponding to $d_{start,l}$ overlap, where $v$ indicates a set of start locations of detection windows, and an initial set of $v$ is $v = \{d_{start,1}\}$;
if the detection window corresponding to $d_{start,n}$ and the detection window corresponding to $d_{start,l}$ do not overlap, determine that the start location of the n<sup>th</sup> cyclic shift sequence is $d_{start,n}$ and add $d_{start,n}$ to $v$; and
if the detection window corresponding to $d_{start,n}$ and the detection window corresponding to $d_{start,l}$ overlap, assume $d_{start,n} = d_{start,n} + 1$ and repeatedly perform the foregoing steps until $d_{start,n} \ge N_{ZC} - N_{CS}$.

With reference to any one of the fourth aspect to the third possible implementation of the fourth aspect, in a fourth possible implementation of the fourth aspect, the base station further includes a sending unit, where
the sending unit is configured to: before the detection unit performs uplink random access detection according to the k<sup>th</sup> available root sequence of the K available root sequences, send a physical random access channel PRACH time-frequency resource to user equipment UE, where the PRACH time-frequency resource and a PRACH time-frequency resource that is configured by the base station for the UE when M=1 are configured independently; and
the detection unit is specifically configured to:

perform uplink random access detection on the PRACH according to the k<sup>th</sup> available root sequence of the K available root sequences.

With reference to any one of the fourth aspect to the fourth possible implementation of the fourth aspect, in a fifth possible implementation of the fourth aspect, the base station further includes a sending unit, where

the sending unit is configured to: after the determining unit determines the K available root sequences for uplink random access according to the preset policy and before the detection unit performs uplink random access detection according to the $k^{th}$ available root sequence of the K available root sequences, send a sequence number of an initial sequence and a quantity Q of random access sequences supported by a cellular to the UE, where Q≥1 and Q is an integer;

the determining unit is further configured to determine an initial available root sequence in the K available root sequences according to the sequence number; and

the detection unit is specifically configured to:

perform uplink random access detection according to the initial available root sequence or any one of Q-1 available root sequences after the initial available root sequence.

With reference to any one of the fourth aspect to the fourth possible implementation of the fourth aspect, in a sixth possible implementation of the fourth aspect, the base station further includes a sending unit, where

the determining unit is further configured to: after the determining unit determines the K available root sequences for uplink random access according to the preset policy and before the detection unit performs uplink random access detection according to the $k^{th}$ available root sequence of the K available root sequences, determine whether Q consecutive available root sequences exist in the K available root sequences, where Q is a quantity of random access sequences supported by a cellular, 1≤Q≤K, and Q is an integer; and

the sending unit is configured to: if the Q consecutive available root sequences exist, send a sequence number of an initial available root sequence and a configuration message to the UE, where the sequence number of the initial available root sequence is a sequence number of the first available root sequence of the Q consecutive available root sequences, and the configuration message is used to indicate that $N_{CS}$ supports a non-limited set and $N_{CS}$ is configured to 0, where $N_{CS}$ indicates a length of an uplink detection window.

Based on the uplink random access method and the base station that are provided in the embodiments of the present invention, in the embodiments of the present invention, a maximum quantity of detection windows of single UE that can be supported by each available root sequence for uplink random access and that is determined by the base station according to a preset policy is 2M+1, where M>1. That is, the maximum quantity of detection windows of the single UE that can be supported by each available root sequence for uplink random access and that is determined by the base station is at least five, and maximum detection windows that can be supported by each available root sequence do not overlap with each other, thereby avoiding a problem in the prior art that a success rate of uplink random access by UE is greatly decreased because a targeted design is generally applicable only to a relatively small frequency offset, for example, a maximum quantity of detection windows that can be supported by an available root sequence for uplink random access is three, and when the frequency offset is greater than a particular value, correlation peaks occur at multiple detection window locations after a local access sequence is correlated to a received access sequence, but a base station accesses the UE with a relatively large success rate when peaks occur at a maximum of three detection windows. In the embodiments of the present invention, the base station determines K available root sequences for uplink random access, where the maximum quantity of detection windows of the single UE that can be supported by each of the K available root sequences becomes larger. Therefore, when a frequency offset is greater than a particular value, and when correlation peaks occur at multiple locations after a local access sequence is correlated to a received access sequence, the base station can access the UE with a relatively large success rate when peaks occur at more detection windows, thereby improving a success rate of uplink random access when an uplink frequency offset is relatively large.

According to a fifth aspect, an uplink random access method is provided, where the method includes:

receiving, by user equipment UE, a sequence number of an initial available root sequence and a configuration message that are sent by a base station, where a maximum quantity of detection windows of single UE that can be supported by the initial available root sequence is 2M+1, maximum detection windows of the single UE that can be supported by the initial available root sequence do not overlap with each other, and the configuration message is used to indicate that $N_{CS}$ supports a non-limited set and $N_{CS}$ is configured to 0, where $N_{CS}$ indicates a length of an uplink detection window, M is a detection window parameter, M>1, and M is an integer; and

performing, by the UE according to the sequence number and the configuration message, random access on the initial available root sequence or any available root sequence of Q-1 consecutive root sequences after the initial available root sequence, where a maximum quantity of detection windows of the single UE that can be supported by any one of the Q-1 root sequences is 2M+1, and maximum detection windows of the single UE that can be supported by any one of the Q-1 root sequences do not overlap with each other, where Q is a quantity of random access sequences supported by a cellular, Q≥1, and Q is an integer.

According to a sixth aspect, user equipment UE is provided, where the UE includes: a receiving unit and an access unit, where

the receiving unit is configured to receive a sequence number of an initial available root sequence and a configuration message that are sent by a base station, where a maximum quantity of detection windows of single UE that can be supported by the initial available root sequence is 2M+1, maximum detection windows of the single UE that can be supported by the initial available root sequence do not overlap with each other, and the configuration message is used to indicate that $N_{CS}$ supports a non-limited set and $N_{CS}$ is configured to 0, where $N_{CS}$ indicates a length of an uplink detection window, M is a detection window parameter, M>1, and M is an integer; and

the access unit is configured to perform, according to the sequence number and the configuration message, random access on the initial available root sequence or any available root sequence of Q-1 consecutive root sequences after the initial available root sequence, where a maximum quantity of detection windows of the single UE that can be supported by any one of the Q-1 root sequences is 2M+1, and maximum detection windows of the single UE that can be supported by any one of the Q-1 root sequences do not overlap with each other, where Q is a quantity of random access sequences supported by a cellular, Q≥1, and Q is an integer.

Based on the uplink random access method and the UE that are provided in the embodiments of the present invention, on one hand, a maximum quantity of detection windows of single UE that can be supported by an initial available root sequence or any one of Q-1 consecutive available root sequences after the initial available root sequence is 2M+1, where M>1. That is, the maximum quantity of detection windows of the single UE that can be supported by each available root sequence is at least five, and maximum detection windows that can be supported by each available root sequence do not overlap with each other, thereby avoiding a problem in the prior art that a success rate of uplink random access by UE is greatly decreased because a targeted design is generally applicable only to a relatively small frequency offset, for example, a maximum quantity of detection windows that can be supported by an available root sequence for uplink random access is three, and when the frequency offset is greater than a particular value, correlation peaks occur at multiple detection window locations after a local access sequence is correlated to a received access sequence, but a base station accesses the UE with a relatively large success rate when peaks occur at a maximum of three detection windows. In the embodiments of the present invention, a base station sends an initial available root sequence or Q-1 consecutive available root sequences after the initial available root sequence, where the maximum quantity of detection windows of the single UE that can be supported by each available root sequence becomes larger. Therefore, when a frequency offset is greater than a particular value, and when correlation peaks occur at multiple locations after a local access sequence is correlated to a received access sequence, the base station can access the UE with a relatively large success rate when peaks occur at more detection windows, thereby improving a success rate of uplink random access when an uplink frequency offset is relatively large. On the other hand, a configuration message sent by the base station indicates that $N_{CS}$ supports a non-limited set and $N_{CS}$ =0, that is, it is represented that available root sequences determined when M=1 and these available root sequences overlap. Therefore, low-version UE is allowed to perform uplink random access by using these available root sequences, thereby better achieving backward compatibility.

According to a seventh aspect, user equipment UE is provided, where the UE includes a processor, a memory, a bus, and a communications interface, where

the memory is configured to store a computer execution instruction, the processor is connected to the memory by using the bus, and when the UE is running, the processor executes the computer execution instruction that is stored in the memory to enable the UE to perform the uplink random access method according to any one of the possible implementations of the first aspect or the uplink random access method according to the fifth aspect.

Because the UE provided in this embodiment of the present invention can perform the uplink random access method according to any one of the possible implementations of the first aspect or the uplink random access method according to the fifth aspect, for technical effects that can be achieved by the UE, refer to the foregoing embodiments, and details are not described herein again.

According to an eighth aspect, a base station is provided, where the base station includes a processor, a memory, a bus, and a communications interface, where

the memory is configured to store a computer execution instruction, the processor is connected to the memory by using the bus, and when the base station is running, the processor executes the computer execution instruction that is stored in the memory to enable the base station to perform the uplink random access method according to any one of the possible implementations of the third aspect.

Because the base station provided in this embodiment of the present invention can perform the uplink random access method according to any one of the possible implementations of the third aspect, for technical effects that can be achieved by the base station, refer to the foregoing embodiments, and details are not described herein again.

## BRIEF DESCRIPTION OF DRAWINGS

To describe the technical solutions in the embodiments of the present invention or in the prior art more clearly, the following briefly describes the accompanying drawings required for describing the embodiments or the prior art.

Apparently, the accompanying drawings in the following description show merely some embodiments of the present invention, and a person of ordinary skill in the art may still derive other drawings from these accompanying drawings without creative efforts.

FIG. 1 is a first schematic flowchart of an uplink random access method according to an embodiment of the present invention;

FIG. 2 is a second schematic flowchart of an uplink random access method according to an embodiment of the present invention;

FIG. 3 is a third schematic flowchart of an uplink random access method according to an embodiment of the present invention;

FIG. 4 is a fourth schematic flowchart of an uplink random access method according to an embodiment of the present invention;

FIG. 5 is a fifth schematic flowchart of an uplink random access method according to an embodiment of the present invention;

FIG. 6 is a sixth schematic flowchart of an uplink random access method according to an embodiment of the present invention;

FIG. 7 is a seventh schematic flowchart of an uplink random access method according to an embodiment of the present invention;

FIG. 8 is an eighth schematic flowchart of an uplink random access method according to an embodiment of the present invention;

FIG. 9 is a ninth schematic flowchart of an uplink random access method according to an embodiment of the present invention;

FIG. 10 is a tenth schematic flowchart of an uplink random access method according to an embodiment of the present invention;

FIG. 11 is a first schematic structural diagram of UE according to an embodiment of the present invention;

FIG. 12 is a second schematic structural diagram of UE according to an embodiment of the present invention;

FIG. 13 is a third schematic structural diagram of UE according to an embodiment of the present invention;

FIG. 14 is a fourth schematic structural diagram of UE according to an embodiment of the present invention;

FIG. 15 is a first schematic structural diagram of a base station according to an embodiment of the present invention;

FIG. 16 is a second schematic structural diagram of a base station according to an embodiment of the present invention;

FIG. 17 is a third schematic structural diagram of a base station according to an embodiment of the present invention;

FIG. 18 is a fourth schematic structural diagram of a base station according to an embodiment of the present invention;

FIG. 19 is a fifth schematic structural diagram of UE according to an embodiment of the present invention;

FIG. 20 is a first schematic architectural diagram of an uplink random access system according to an embodiment of the present invention; and

FIG. 21 is a second schematic architectural diagram of an uplink random access system according to an embodiment of the present invention.

## DESCRIPTION OF EMBODIMENTS

To clearly and briefly describe the following embodiments, formulas, inequalities, and related definitions of parameters in the formulas and the inequalities in the embodiments of the present invention are listed first.
First, the related definitions of the parameters in the formulas and the inequalities in the embodiments of the present invention are provided, as shown in Table 1.

**Table 1**

| Parameter | Definition |
|---|---|
| M | Detection window parameter, where a maximum quantity of detection windows that is supported by single UE is 2M+1 and the parameter is related to a frequency offset |
| m | Detection window of single UE, where $m \in \{-M,...,0,...,M\}$ |
| u | Root sequence generation parameter |
| $d_u$ | Offset of a peak shifted by a subcarrier |
| $N_{CS}$ | Length of an uplink detection window |

(continued)

| Parameter | Definition |
|---|---|
| $N_{ZC}$ | Length of an uplink access root sequence |
| mod | Modulo operation |
| $x_u(n)$ | Root sequence |
| P | Minimum non-negative integer satisfying $(p \times u) \bmod N_{ZC} = 1$ |
| $d_{start,n'}$ | Start location of the nth cyclic shift sequence |
| $d_{start,n1}$ | Start location of a detection window of the nth cyclic shift sequence |
| $d_{start,n2}$ | End location of a detection window of the nth cyclic shift sequence |

Second, the inequalities, such as an inequality (1) to an inequality (6), in the embodiments of the present invention are provided:

$$(m \times d_u + N_{CS} - 1) \bmod N_{ZC} < (m \times d_u) \bmod N_{ZC} \qquad \text{inequality (1);}$$

$$(m_a \times d_u) \bmod N_{ZC} \le (m_b \times d_u) \bmod N_{ZC} \qquad \text{inequality (2);}$$

$$(m_a \times d_u + N_{CS} - 1) \bmod N_{ZC} \ge (m_b \times d_u) \bmod N_{ZC} \qquad \text{inequality (3);}$$

$$(m_b \times d_u + N_{CS} - 1) \bmod N_{ZC} \ge (m_a \times d_u) \bmod N_{ZC} \qquad \text{inequality (4);}$$

$$(m_b \times d_u + N_{CS} - 1) \bmod N_{ZC} \le (m_a \times d_u + N_{CS} - 1) \bmod N_{ZC} \qquad \text{inequality (5);}$$

and

$$d_{start,n} \ge N_{ZC} - N_{CS} \qquad \text{inequality (6).}$$

Third, the formulas, such as a formula (1) to a formula (6), in the embodiments of the present invention are provided:

$$d_u = \begin{cases} p & 0 \le p \le N_{ZC}/2 \\ N_{ZC} - p & \text{others} \end{cases} \qquad \text{formula (1);}$$

$$d_{start,n1} = (d_{start,n} + m \times d_u) \bmod N_{ZC} \qquad \text{formula (2);}$$

$$d_{start,n2} = (d_{start,n} + m \times d_u + N_{CS} - 1) \bmod N_{ZC} \qquad \text{formula (3);}$$

$$d_{start,n+1} = d_{start,n} + N_{CS} \qquad \text{formula (4);}$$

$$d_{start,n} = d_{start,n} + 1 \qquad \text{formula (5);}$$

and

$$x_u(n) = e^{\frac{-jun(n+1)}{N_{ZC}}}$$ formula (6).

The following describes the technical solutions in the embodiments of the present invention with reference to the accompanying drawings in the embodiments of the present invention. Apparently, the described embodiments are merely a part rather than all of the embodiments of the present invention. In the following descriptions, for the purpose of explanation but not for limitation, particular details are described for clear understanding. In some embodiments, elaboration of an apparatus, a circuit, and a method that are publicly known is omitted, so as to avoid ambiguous descriptions resulting from unnecessary details. In the specification, a same reference numeral or a same name refers to same or similar elements.

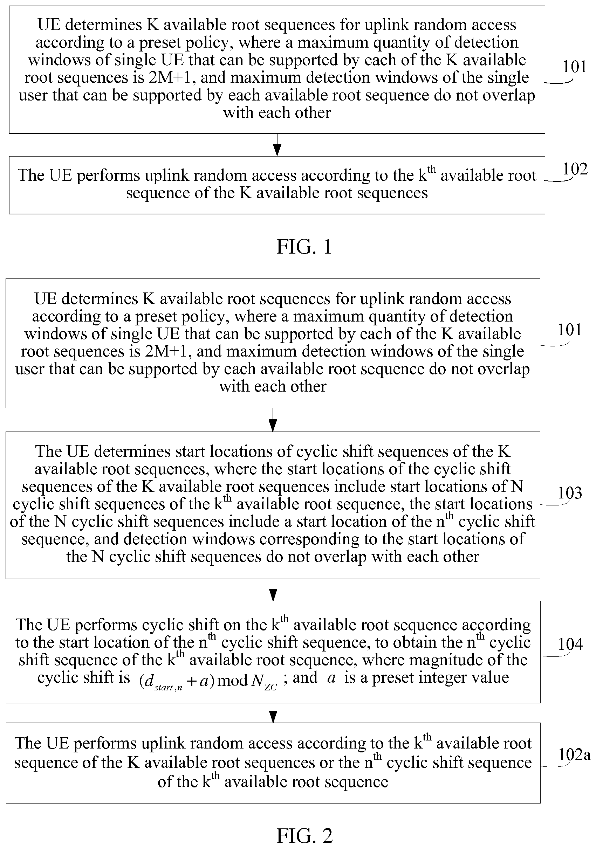

An embodiment of the present invention provides an uplink random access method. As shown in FIG. 1, the method includes the following steps.

S101: UE determines K available root sequences for uplink random access according to a preset policy, where a maximum quantity of detection windows of single UE that can be supported by each of the K available root sequences is 2M+1, and maximum detection windows of the single UE that can be supported by each available root sequence do not overlap with each other.

K≥1, M>1, and both K and M are integers.

Specifically, a detection window in this embodiment of the present invention is caused by a frequency offset. In a case of different frequency offsets, correlation peaks may be generated at multiple locations when a local sequence is correlated to a received sequence. The locations at which the correlation peaks may occur are locations of detection windows.

Specifically, in this embodiment of the present invention, the UE determines at least one available root sequence for uplink random access according to the preset policy, that is, the UE may determine multiple available root sequences for uplink random access according to the preset policy. For example, if there are sequence numbers 0 to 99 of 100 root sequences, the UE may sequentially determine, according to the preset policy, whether root sequences corresponding to the sequence numbers of the 100 root sequences are available root sequences; if a root sequence is not an available root sequence, the root sequence is skipped. If 50 root sequences are skipped, a quantity K of finally determined available root sequences for uplink random access is equal to 50. The maximum quantity of detection windows of the single UE that can be supported by each of the K available root sequences is 2M+1, where M>1, and maximum detection windows of the single UE that can be supported by each available root sequence do not overlap with each other. That is, the maximum quantity of detection windows of the single UE that can be supported by each available root sequence is at least five, and the detection windows of the single UE do not overlap with each other.

S102: The UE performs uplink random access according to the kth available root sequence of the K available root sequences.

1≤k≤K and k is an integer.

That is, after determining the K available root sequences for uplink random access, the UE may perform uplink random access by using any one of the K available root sequences.

Based on the uplink random access method provided in this embodiment of the present invention, in this embodiment of the present invention, a maximum quantity of detection windows of single UE that can be supported by each available root sequence for uplink random access and that is determined by UE according to a preset policy is 2M+1, where M>1. That is, the maximum quantity of detection windows of the single UE that can be supported by each available root sequence for uplink random access and that is determined by the UE is at least five, and maximum detection windows that can be supported by each available root sequence do not overlap with each other, thereby avoiding a problem in the prior art that a success rate of uplink random access by UE is greatly decreased because a targeted design is generally applicable only to a relatively small frequency offset, for example, a maximum quantity of detection windows that can be supported by an available root sequence for uplink random access is three, and when the frequency offset is greater than a particular value, correlation peaks occur at multiple detection window locations after a local access sequence is correlated to a received access sequence, but a base station accesses the UE with a relatively large success rate when peaks occur at a maximum of three detection windows. In this embodiment of the present invention, the UE determines K available root sequences for uplink random access, where the maximum quantity of detection windows of the single UE that can be supported by each of the K available root sequences becomes larger. Therefore, when a frequency offset is greater than a particular value, and when correlation peaks occur at multiple locations after a local access sequence is correlated to a received access sequence, a base station can access the UE with a relatively large success rate when peaks occur at more detection windows, thereby improving a success rate of uplink random access when an uplink frequency offset is relatively large.

Preferably, in step S101 in this embodiment of the present invention, the preset policy may specifically include:

a root sequence satisfying none of the following condition A, condition B, and condition C is an available root sequence:

the condition A: any detection window $m \in \{-M,...,0,...,M\}$ of the single UE satisfies the inequality (1);

the condition B: any detection windows $m_a$ and $m_b$ of the single UE, where $m_a \neq m_b$ and $m_a, m_b \in \{-M,...,0,...,M\}$, satisfy the inequality (1) and the inequality (3); and

the condition C: any detection windows $m_a$ and $m_b$ of the single UE, where $m_a \neq m_b$ and $m_a, m_b \in \{-M,...,0,...,M\}$, satisfy the inequality (4) and the inequality (5).

It should be noted that the foregoing merely provides an example of a preset policy. The preset policy makes the maximum quantity of detection windows of the single UE that can be supported by the available root sequence for uplink random access and that is determined by the UE be at least five; certainly, there may be another preset policy that makes the maximum quantity of detection windows of the single UE that can be supported by the available root sequence for uplink random access and that is determined by the UE be at least five. This is not specifically limited in this embodiment of the present invention.

Further, as shown in FIG. 2, after the determining, by UE, K available root sequences for uplink random access according to a preset policy, the method further includes:

S103: The UE determines start locations of cyclic shift sequences of the K available root sequences, where the start locations of the cyclic shift sequences of the K available root sequences include start locations of N cyclic shift sequences of the $k^{th}$ available root sequence, the start locations of the N cyclic shift sequences include a start location of the $n^{th}$ cyclic shift sequence, and $N \times (2M+1)$ detection windows corresponding to the start locations of the N cyclic shift sequences do not overlap with each other.

$1 \leq n \leq N$, $N \geq 1$, N indicates a quantity of cyclic shift sequences of the $k^{th}$ available root sequence, and both n and N are integers.

Specifically, for each root sequence, more cyclic shift sequences may be generated, by means of cyclic shift, for uplink random access by the UE. Therefore, in this embodiment of the present invention, after determining the K available root sequences for uplink random access, the UE determines, for each available root sequence, start locations of multiple cyclic shift sequences of the root sequence. $N \times (2M+1)$ detection windows corresponding to the start locations of the multiple cyclic shift sequences of the root sequence do not overlap with each other. For example, for an available root sequence 1, if there are start locations of N=3 cyclic shift sequences for the available root sequence 1 and a start location of each cyclic shift sequence corresponds to five detection windows, the start locations of the three cyclic shift sequences correspond to 15 detection windows, and the 15 detection windows do not overlap with each other.

S104: The UE performs cyclic shift on the $k^{th}$ available root sequence according to the start location of the $n^{th}$ cyclic shift sequence, to obtain the $n^{th}$ cyclic shift sequence of the $k^{th}$ available root sequence, where magnitude of the cyclic shift is $(d_{start,n} + a) \bmod N_{ZC}$; and $a$ is a preset integer value.

Preferably, $a$ may be prestored by the UE, or may be sent by a base station to the UE, that is, the base station configures same $a$ for all UEs. This is not specifically limited in this embodiment of the present invention.

Further, the performing, by the UE, uplink random access according to the $k^{th}$ available root sequence of the K available root sequences (step S102) may specifically include:

S102a: The UE performs uplink random access according to the $k^{th}$ available root sequence of the K available root sequences or the $n^{th}$ cyclic shift sequence of the $k^{th}$ available root sequence.

That is, after determining the K available root sequences for uplink random access and the start locations of the cyclic shift sequences of the K available root sequences, the UE may perform uplink random access by using any one of the K available root sequences, or perform uplink random access according to the $n^{th}$ cyclic shift sequence of the $k^{th}$ available root sequence. This is not specifically limited in this embodiment of the present invention.

Specifically, in this embodiment of the present invention, because the UE determines, for each available root sequence, start locations of multiple cyclic shift sequences of the root sequence, the UE has more choices to perform uplink random access. Therefore, a probability of a conflict between UEs during uplink random access is decreased, thereby further improving a success rate of uplink random access when an uplink frequency offset is relatively large.

Preferably, the start location of the $n^{th}$ cyclic shift sequence is obtained through calculation by using the following steps:

Step 1: Obtain a start location of a detection window of the $n^{th}$ cyclic shift sequence according to the formula (2), and obtain an end location of the detection window of the $n^{th}$ cyclic shift sequence according to the formula (3), where $d_{start,1} = 0$ and $d_{start,n} = d_{start,n-1} + N_{CS}$.

Step 2: Determine, for any $d_{start,l} \in v$, whether a detection window corresponding to $d_{start,n}$ and a detection window corresponding to $d_{start,l}$ overlap, where $v$ indicates a set of start locations of detection windows, and an initial set of $v$ is $v = \{d_{start,1}\}$.

Step 3: If the detection window corresponding to $d_{start,n}$ and the detection window corresponding to $d_{start,l}$ do not overlap, determine that the start location of the $n^{th}$ cyclic shift sequence is $d_{start,n}$ and add $d_{start,n}$ to $v$.

Step 4: If the detection window corresponding to $d_{start,n}$ and the detection window corresponding to $d_{start,l}$ overlap, assume $d_{start,n} = d_{start,n} + 1$ and repeatedly perform the foregoing step 1 to step 4 until $d_{start,n} \geq N_{ZC} - N_{CS}$.

The following provides a method for determining the start locations of the N cyclic shift sequences of the $k^{th}$ available root sequence with reference to a specific example.

For example, it is assumed that $N_{ZC} = 839$, $N_{CS} = 18$, $u = 78$, and $M = 2$. Because $m \in \{-M,...,0,...,M\}$, $m \in \{-2,-1,0,1,2\}$, that is, values of $m$ may be respectively -2, -1, 0, 1, and 2. If it is determined according to the preset policy that the root sequence $x_u(n)$ is available, a method for determining start locations of N cyclic shift sequences of the available root sequence $x_u(n)$ is as follows:

S1: When $n = 1$, set an initial start location to $d_{start,1} = 0$, so that a set of start locations of current detection windows is $v \{d_{start,1}\} = \{0\}$.

S2: Assume that the values of $m$ are respectively -2, -1, 0, 1, and 2, when $n = 1$, obtain, through calculation according to the formula (2), start locations of $2 * M + 1 = 5$ detection windows corresponding to $d_{start,n}$, which are respectively 0, 398, 796, 43, and 441, and when $n = 1$, obtain, through calculation according to the formula (3), end locations of the $2 * M + 1 = 5$ detection windows corresponding to $d_{start,n}$, which are respectively 17, 415, 813, 60, and 458. Therefore, the $2 * M + 1 = 5$ detection windows corresponding to $d_{start,n}$ are [0, 17], [398, 415], [796, 813], [43, 60], and [441, 458].

S3: Assume $n = n + 1$, that is, $n = 2$, and obtain, through calculation according to the formula (4), a start location $d_{start,2} = d_{start,1} + N_{CS} = 0 + 18 = 18$.

S4: Determine, according to the inequality (6), that a condition $18 \geq 839 - 18$ is false, and perform step S5.

S5: Similar to step S2, assume that the values of $m$ are respectively -2, -1, 0, 1, and 2; and when $n = 2$, respectively obtain, through calculation according to the formula (2) and the formula (3), five detection windows corresponding to $d_{start,n}$ which are [18, 35], [416, 433], [814, 831], [61, 78], and [459, 476].

S6: Compare the five detection windows with the detection windows [0, 17], [398, 415], [796, 813], [43, 60], and [441,458] that correspond to the existing set $v = \{0\}$ of start locations.

S7: If no overlap exists in a comparison result, add the start location $d_{start,2} = 18$ to the set of start locations, that is, update the set of start locations to $v = \{0,18\}$, so that a new set of detection windows that corresponds to the set $v = \{0,18\}$ of start locations is a union set of the detection windows corresponding to the start locations in the set of start locations, that is, [0, 17], [398, 415], [796, 813], [43, 60], [441, 458], [18, 35], [416, 433], [814, 831], [61, 78], and [459, 476].

S7: Similar to step S3 to step S6, assume $n = n +$, that is, $n = 3$, and obtain, through calculation according to the formula (4), $d_{start,3} = d_{start,2} + N_{CS} = 18 + 18 = 36$; after it is determined that a condition $36 \geq 839 - 18$ is false, assume that the values of $m$ are respectively -2, -1, 0, -1, and -2; when $n = 3$, respectively obtain, through calculation according to the formula (2) and the formula (3), five detection windows corresponding to $d_{start,n}$, which are [36, 53], [434, 451], [832, 849], [79, 96], and [477, 494]; and then perform a step similar to S6, that is, compare the five detection windows with the detection windows [0, 17], [398, 415], [796, 813], [43, 60], [441, 458], [18, 35], [416, 433], [814, 831], [61, 78], and [459, 476] that correspond to the existing set $v = \{0,18\}$ of start locations.

S8: [36, 53] and [43, 60] that is in the existing detection windows overlap, and [434,451] and [441,458] that is in the existing detection windows overlap. That is, some detection windows overlap with each other. Therefore, the set $v = \{0,18\}$ of start locations cannot include a start location $d_{start,3} = 36$ that is obtained through calculation when $n = 3$, that is, the set $v = \{0,18\}$ of start locations cannot include 36. After $d_{start,3} = d_{start,3} + 1 = 37$ is calculated according to the formula (5) when $n = 3$, repeatedly perform steps similar to step S4 to step S6. If in a step similar to step S6, no overlap exists in a comparison result, perform a step similar to step S7; if in a step similar to step S6, no overlap exists in a comparison result, perform a step similar to step S8, and so on, until a condition of the inequality (6) is true, so that a set $v = \{d_{start,1}, d_{start,2},...,d_{start,n}\}$ of the start locations of the N cyclic shift sequences is obtained, and an entire calculation process ends.

Preferably, a configuration parameter in this embodiment of the present invention may be prestored by the UE, or may be sent by the base station to the UE. This is not specifically limited in this embodiment of the present invention. The configuration parameter includes at least one of the following parameters: M, $N_{ZC}$, or $N_{CS}$.

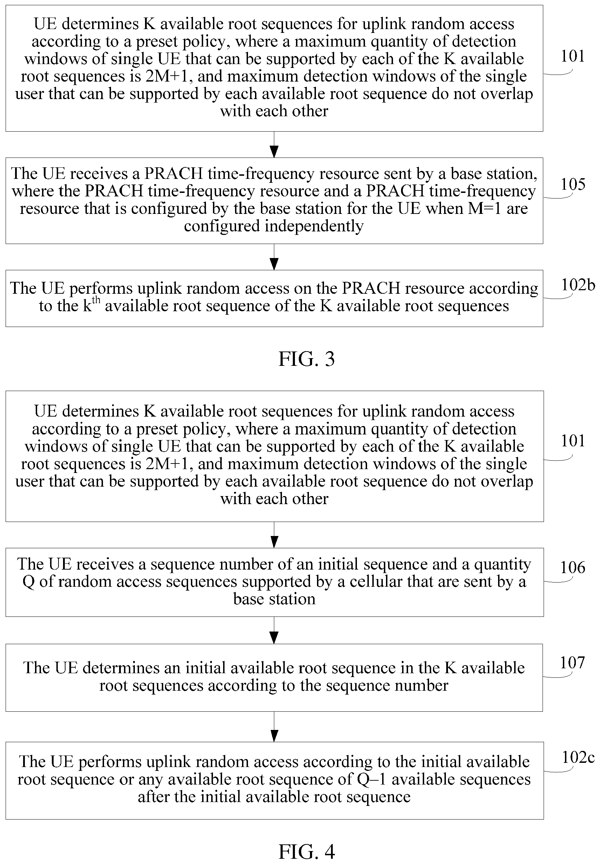

Further, as shown in FIG. 3, in this embodiment of the present invention, before the performing, by the UE, uplink random access according to the $k^{th}$ available root sequence of the K available root sequences (step S102), the method may further include:

S105: The UE receives a PRACH time-frequency resource sent by a base station, where the PRACH time-frequency resource and a PRACH time-frequency resource that is configured by the base station for the UE when M=1 are configured independently.

Further, step S102 may specifically include:

S102b: The UE performs uplink random access on the PRACH resource according to the $k^{th}$ available root sequence of the K available root sequences.

That is, in this embodiment of the present invention, in consideration of compatibility with a PRACH design standard of an existing LTE system, if a PRACH time-frequency resource that is configured by the base station for the UE when M>1 and a PRACH time-frequency resource that is configured by the base station for the UE when M=1 in an existing standard overlap, that different UEs contend for the PRACH time-frequency resource during uplink random access is easily caused. Consequently, a problem that a success rate of uplink random access by the UE is greatly decreased is caused. Therefore, in this embodiment of the present invention, the base station independently configures the PRACH time-frequency resource when M>1 and the PRACH time-frequency resource when M=1, thereby avoiding the problem that the success rate of uplink random access by the UE is greatly decreased because the PRACH time-frequency resource that is configured by the base station for the UE when M>1 and the PRACH time-frequency resource that is configured by the base station for the UE when M=1 in the existing standard overlap, and further improving a success rate of uplink random access when an uplink frequency offset is relatively large.

Further, as shown in FIG. 4, in this embodiment of the present invention, after the determining, by UE, K available root sequences for uplink random access according to a preset policy (step S101) and before the performing, by the UE, uplink random access according to the $k^{th}$ available root sequence of the K available root sequences (step S 102), the method further includes:

S106: The UE receives a sequence number of an initial sequence and a quantity Q of random access sequences supported by a cellular that are sent by the base station.

Q≥1 and Q is an integer.

Specifically, in this embodiment of the present invention, the sequence number of the initial sequence that is sent by the base station to the UE may be a sequence number of an available root sequence determined by the base station or may be a sequence number of a non-available root sequence. This is not specifically limited in this embodiment of the present invention.

S107: The UE determines an initial available root sequence in the K available root sequences according to the sequence number.

Specifically, in this embodiment of the present invention, after receiving the sequence number, the UE may determine, in the K available root sequences, that the first available root sequence after the sequence number is the initial available root sequence. For example, if root sequences whose sequence numbers are 10, 12, 13, and 15 are non-available root sequences and the sequence number of the initial sequence that is sent by the base station to the UE is 12, the UE may determine that the initial available root sequence is an available root sequence whose root sequence number is 14.

Further, step S102 may specifically include:

S 102c: The UE performs uplink random access according to the initial available root sequence or any available root sequence of Q-1 available sequences after the initial available root sequence.

Specifically, in this embodiment of the present invention, the Q-1 available sequences after the initial available root sequence may specifically include root sequences, and may also include cyclic shift sequences of the root sequences that are obtained according to the foregoing method embodiments. This is not specifically limited in this embodiment of the present invention.

Based on the foregoing solution of this embodiment of the present invention, UE may select an uplink random access sequence according to a sequence number of an initial sequence and a quantity Q of random access sequences supported by a cellular that are sent by a base station, thereby avoiding a conflict that may be caused when UEs in different cells perform uplink random access, and further improving a success rate of uplink random access when an uplink frequency offset is relatively large.

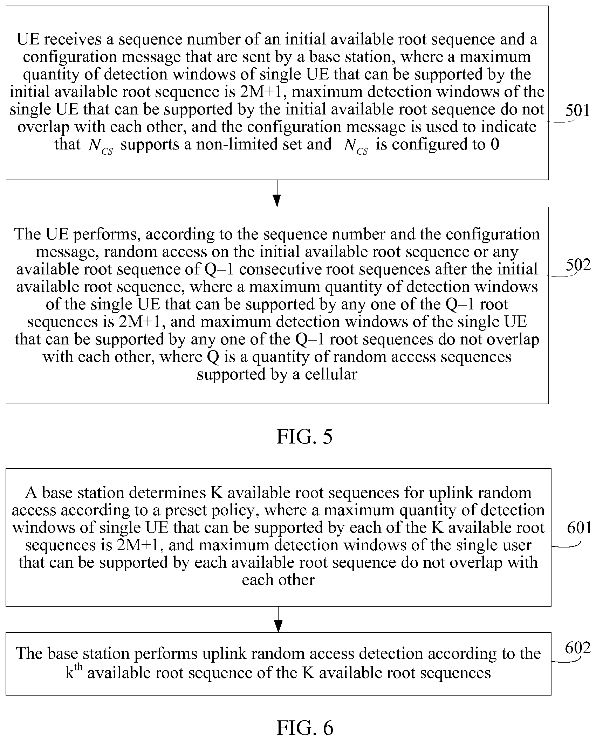

An embodiment of the present invention provides an uplink random access method. As shown in FIG. 5, the method includes the following steps.

S501: UE receives a sequence number of an initial available root sequence and a configuration message that are sent by a base station, where a maximum quantity of detection windows of single UE that can be supported by the initial available root sequence is 2M+1, maximum detection windows of the single UE that can be supported by the initial available root sequence do not overlap with each other, and the configuration message is used to indicate that $N_{CS}$ supports a non-limited set and $N_{CS}$ is configured to 0.

M>1, and M is an integer.

Specifically, in a standard of an existing LTE system, the base station indicates an available uplink access sequence to the UE by using the configuration message, and the base station notifies the UE of a size of an uplink detection window by sending the configuration message of $N_{CS}$. The UE obtains, through calculation, an available root sequence and an available cyclic shift by using an obtained value of $N_{CS}$. The value of $N_{CS}$ may be obtained by using a configuration of $N_{CS}$ and a message indicating whether a non-limited set is supported. A correspondence between a configuration of $N_{CS}$ and a value of $N_{CS}$ is shown in Table 2. When $N_{CS}$ is configured to 0 and supports a non-limited set, an obtained value of $N_{CS}$ is 0; when $N_{CS}$ is configured to 0 and does not support a non-limited set, an obtained value of $N_{CS}$ is 15; when $N_{CS}$ is configured to 1 and supports a non-limited set, an obtained value of $N_{CS}$ is 13; or when $N_{CS}$ is configured to 1 and does not support a non-limited set, an obtained value of $N_{CS}$ is 18.

**Table 2**

| Configuration of $N_{CS}$ | Value of $N_{CS}$ | |
|---|---|---|
| | Non-limited set | Limited set |
| 0 | 0 | 15 |
| 1 | 13 | 18 |
| 2 | 15 | 22 |
| 3 | 18 | 26 |
| 4 | 22 | 32 |
| 5 | 26 | 38 |
| 6 | 32 | 46 |
| 7 | 38 | 55 |
| 8 | 46 | 68 |
| 9 | 59 | 82 |
| 10 | 76 | 100 |
| 11 | 93 | 128 |
| 12 | 119 | 158 |
| 13 | 167 | 202 |
| 14 | 279 | 237 |
| 15 | 419 | - |

In this embodiment of the present invention, the configuration message is used to indicate that $N_{CS}$ supports a non-limited set and $N_{CS}$ is configured to 0. Therefore, the value of $N_{CS}$ obtained by the UE is 0.

S502: The UE performs, according to the sequence number and the configuration message, random access on the initial available root sequence or any available root sequence of Q-1 consecutive root sequences after the initial available root sequence, where a maximum quantity of detection windows of the single UE that can be supported by any one of the Q-1 root sequences is 2M+1, and maximum detection windows of the single UE that can be supported by any one of the Q-1 root sequences do not overlap with each other, where Q is a quantity of random access sequences supported by a cellular.

Q≥1 and Q is an integer.

Based on the uplink random access method provided in this embodiment of the present invention, on one hand, a maximum quantity of detection windows of single UE that can be supported by an initial available root sequence or any one of Q-1 consecutive available root sequences after the initial available root sequence is 2M+1, where M>1. That is, the maximum quantity of detection windows of the single UE that can be supported by each available root sequence is at least five, and maximum detection windows that can be supported by each available root sequence do not overlap with each other, thereby avoiding a problem in the prior art that a success rate of uplink random access by UE is greatly decreased because a targeted design is generally applicable only to a relatively small frequency offset, for example, a maximum quantity of detection windows that can be supported by an available root sequence for uplink random access is three, and when the frequency offset is greater than a particular value, correlation peaks occur at multiple detection window locations after a local access sequence is correlated to a received access sequence, but a base station accesses the UE with a relatively large success rate when peaks occur at a maximum of three detection windows. In this embodiment of the present invention, a base station sends an initial available root sequence or Q-1 consecutive available root sequences after the initial available root sequence, where the maximum quantity of detection windows of the single UE that can be supported by each available root sequence becomes larger. Therefore, when a frequency offset is greater than a particular value, and when correlation peaks occur at multiple locations after a local access sequence is correlated to a received access sequence, the base station can access the UE with a relatively large success rate when peaks occur at more detection windows, thereby improving a success rate of uplink random access when an uplink frequency offset is relatively large. On the other hand, a configuration message sent by the base station indicates that $N_{CS}$ supports a non-limited set and $N_{CS}$ =0, that is, it is represented that available root sequences determined when M=1 and these available root sequences overlap. Therefore, low-version UE is allowed to perform uplink random access by using these available root sequences, thereby better achieving backward compatibility.

An embodiment of the present invention provides an uplink random access method. As shown in FIG. 6, the method includes the following steps.

S601: A base station determines K available root sequences for uplink random access according to a preset policy, where a maximum quantity of detection windows of single UE that can be supported by each of the K available root sequences is 2M+1, and maximum detection windows of the single UE that can be supported by each available root sequence do not overlap with each other.

K≥1, M>1, and both K and M are integers.

Specifically, a detection window in this embodiment of the present invention is caused by a frequency offset. In a case of different frequency offsets, correlation peaks may be generated at multiple locations when a local sequence is correlated to a received sequence. The locations at which the correlation peaks may occur are locations of detection windows.

Specifically, in this embodiment of the present invention, the base station determines at least one available root sequence for uplink random access according to the preset policy, that is, the base station may determine multiple available root sequences for uplink random access according to the preset policy. For example, if there are sequence numbers 0 to 99 of 100 root sequences, the base station may sequentially determine, according to the preset policy, whether root sequences corresponding to the sequence numbers of the 100 root sequences are available root sequences; if a root sequence is not an available root sequence, the root sequence is skipped. If 60 root sequences are skipped, a quantity K of finally determined available root sequences for uplink random access is equal to 40. The maximum quantity of detection windows of the single UE that can be supported by each of the K available root sequences is 2M+1, where M>1, and maximum detection windows of the single UE that can be supported by each available root sequence do not overlap with each other. That is, the maximum quantity of detection windows of the single UE that can be supported by each available root sequence is at least five, and the detection windows of the single UE do not overlap with each other.

S602: The base station performs uplink random access detection according to the kth available root sequence of the K available root sequences.

1≤k≤K and k is an integer.

That is, after determining the K available root sequences for uplink random access, the base station may perform uplink random access detection by using any one of the K available root sequences.

Based on the uplink random access method provided in this embodiment of the present invention, in this embodiment of the present invention, a maximum quantity of detection windows of single UE that can be supported by each available root sequence for uplink random access and that is determined by a base station according to a preset policy is 2M+1, where M>1. That is, the maximum quantity of detection windows of the single UE that can be supported by each available root sequence for uplink random access and that is determined by the base station is at least five, and maximum detection windows that can be supported by each available root sequence do not overlap with each other, thereby avoiding a problem in the prior art that a success rate of uplink random access by UE is greatly decreased because a targeted design is generally applicable only to a relatively small frequency offset, for example, a maximum quantity of detection windows that can be supported by an available root sequence for uplink random access is three, and when the frequency offset is greater than a particular value, correlation peaks occur at multiple detection window locations after a local access sequence is correlated to a received access sequence, but a base station accesses the UE with a relatively large success rate when peaks occur at a maximum of three detection windows. In the embodiments of the present invention, the base station determines K available root sequences for uplink random access, where the maximum quantity of detection windows of the single UE that can be supported by each of the K available root sequences becomes larger. Therefore, when a frequency offset is greater than a particular value, and when correlation peaks occur at multiple locations after a local access sequence is correlated to a received access sequence, a base station can access the UE with a relatively large success rate when peaks occur at more detection windows, thereby improving a success rate of uplink random access when an uplink frequency offset is relatively large.

Preferably, in step S601 in this embodiment of the present invention, the preset policy may specifically include:

a root sequence satisfying none of the following condition A, condition B, and condition C is an available root sequence:

the condition A: any detection window $m \in \{-M,...,0,...,M\}$ of the single UE satisfies the inequality (1);
the condition B: any detection windows $m_a$ and $m_b$ of the single UE, where $m_a \neq m_b$ and $m_a, m_b \in \{-M,...,0,...,M\}$, satisfy the inequality (1) and the inequality (3); and
the condition C: any detection windows $m_a$ and $m_b$ of the single UE, where $m_a \neq m_b$ and $m_a, m_b \in \{-M,...,0,...,M\}$, satisfy the inequality (4) and the inequality (6).

It should be noted that the foregoing merely provides an example of a preset policy. The preset policy makes the maximum quantity of detection windows of the single UE that can be supported by the available root sequence for uplink random access and that is determined by the base station be at least five; certainly, there may be another preset policy that makes the maximum quantity of detection windows of the single UE that can be supported by the available root sequence for uplink random access and that is determined by the base station be at least five. This is not specifically limited in this embodiment of the present invention.

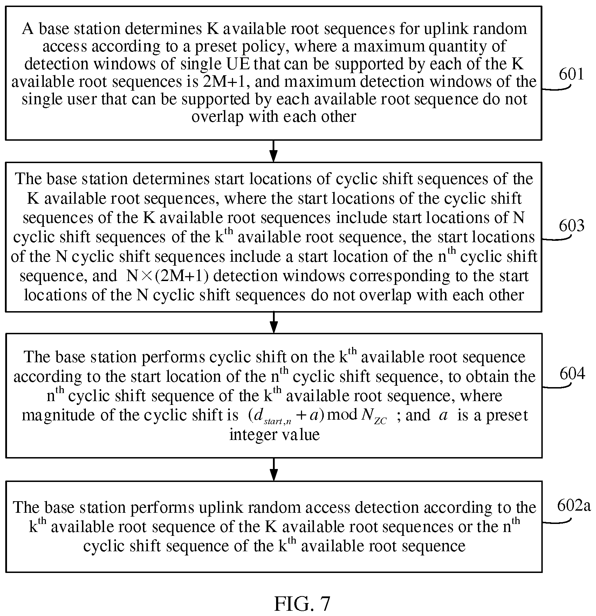

Further, as shown in FIG. 7, after the determining, by a base station, K available root sequences for uplink random access according to a preset policy, the method further includes:

S603: The base station determines start locations of cyclic shift sequences of the K available root sequences, where the start locations of the cyclic shift sequences of the K available root sequences include start locations of N cyclic shift sequences of the $k^{th}$ available root sequence, the start locations of the N cyclic shift sequences include a start location of the $n^{th}$ cyclic shift sequence, and $N \times (2M+1)$ detection windows corresponding to the start locations of the N cyclic shift sequences do not overlap with each other.

$1 \leq n \leq N$, $N \geq 1$, N indicates a quantity of cyclic shift sequences of the $k^{th}$ available root sequence, and both n and N are integers.

Specifically, for each root sequence, more cyclic shift sequences may be generated, by means of cyclic shift, for uplink random access by UE. Therefore, in this embodiment of the present invention, after determining the K available root sequences for uplink random access, the base station determines, for each available root sequence, start locations of multiple cyclic shift sequences of the root sequence. $N \times (2M+1)$ detection windows corresponding to the start locations of the multiple cyclic shift sequences of the root sequence do not overlap with each other. For example, for an available root sequence 1, if there are start locations of N=3 cyclic shift sequences of the available root sequence and a start location of each cyclic shift sequence corresponds to six detection windows, the start locations of the three cyclic shift sequences correspond to 16 detection windows, and the 16 detection windows do not overlap with each other.

S604: The base station performs cyclic shift on the $k^{th}$ available root sequence according to the start location of the $n^{th}$ cyclic shift sequence, to obtain the $n^{th}$ cyclic shift sequence of the $k^{th}$ available root sequence, where magnitude of the cyclic shift is $(d_{start,n} + a) \bmod N_{ZC}$; and $a$ is a preset integer value.

Specifically, $a$ is generally a same parameter configured by the base station for all UEs, so that each UE may shift an original random access sequence by $a$.

Further, the performing, by the base station, uplink random access according to the $k^{th}$ available root sequence of the K available root sequences (step S602) may specifically include:

S602a: The base station performs uplink random access detection according to the $k^{th}$ available root sequence of the K available root sequences or the $n^{th}$ cyclic shift sequence of the $k^{th}$ available root sequence.

That is, after determining the K available root sequences for uplink random access and the start locations of the cyclic shift sequences of the K available root sequences, the base station may perform uplink random access detection by using any one of the K available root sequences, or perform uplink random access detection according to the $n^{th}$ cyclic shift sequence of the $k^{th}$ available root sequence. This is not specifically limited in this embodiment of the present invention.

Specifically, in this embodiment of the present invention, because the base station determines, for each available root sequence, start locations of multiple cyclic shift sequences of the available root sequence, that is, the UE has more choices to perform uplink random access. Therefore, a probability of a conflict between UEs during uplink random access is decreased, thereby further improving a success rate of uplink random access when an uplink frequency offset is relatively large.

Preferably, the start location of the $n^{th}$ cyclic shift sequence is obtained through calculation by using the following steps:

Step 1: Obtain a start location of a detection window of the $n^{th}$ cyclic shift sequence according to the formula (2), and obtain an end location of the detection window of the $n^{th}$ cyclic shift sequence according to the formula (3), where $d_{start,1} = 0$ and $d_{start,n} = d_{start,n-1} + N_{CS}$.

Step 2: Determine, for any $d_{start,l} \in v$, whether a detection window corresponding to $d_{start,n}$ and a detection window corresponding to $d_{start,l}$ overlap, where $v$ indicates a set of start locations of detection windows, and an initial set of v is $v = \{d_{start,l}\}$.

Step 3: If the detection window corresponding to $d_{start,n}$ and the detection window corresponding to $d_{start,l}$ do not overlap, determine that the start location of the $n^{th}$ cyclic shift sequence is $d_{start,n}$ and add $d_{start,n}$ to $v$.

Step 4: If the detection window corresponding to $d_{start,n}$ and the detection window corresponding to $d_{start,l}$ overlap, assume $d_{start,n} = d_{start,n} + 1$ and repeatedly perform the foregoing step 1 to step 4 until $d_{start,n} \geq N_{ZC} - N_{CS}$.

Specifically, for a method for determining the start locations of the N cyclic shift sequences of the $k^{th}$ available root sequence, refer to descriptions of the foregoing method embodiments, and details are not described in this embodiment of the present invention again.

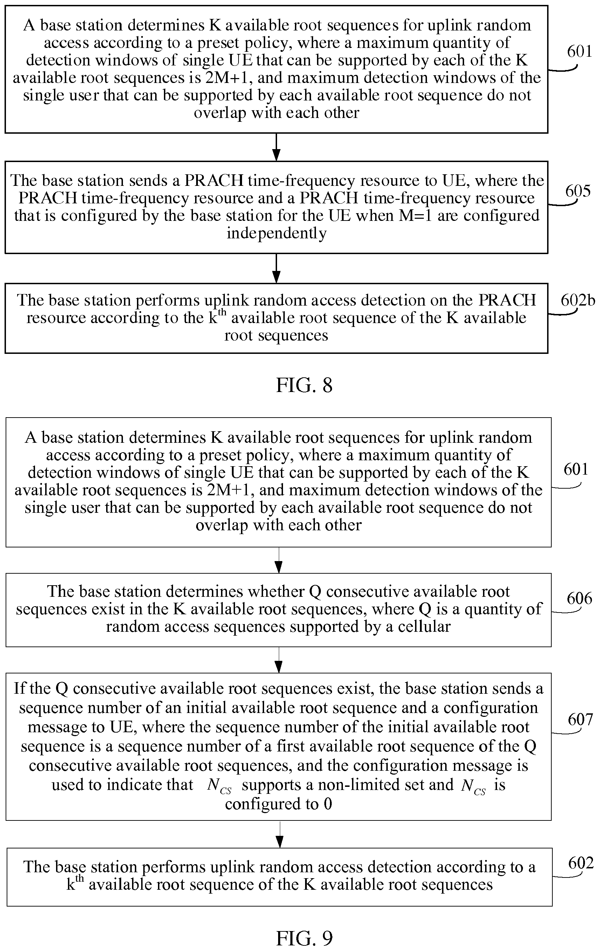

Further, as shown in FIG. 8, in this embodiment of the present invention, before the performing, by the base station, uplink random access detection according to the $k^{th}$ available root sequence of the K available root sequences (step S602), the method may further include:

S606: The base station sends a PRACH time-frequency resource to UE, where the PRACH time-frequency resource and a PRACH time-frequency resource that is configured by the base station for the UE when M=1 are configured independently.

Further, step S602 may specifically include:

S602b: The base station performs uplink random access detection on the PRACH resource according to the $k^{th}$ available root sequence of the K available root sequences.

That is, in this embodiment of the present invention, in consideration of compatibility with a PRACH design standard of an existing LTE system, if a PRACH time-frequency resource that is configured by the base station for the UE when M>1 and a PRACH time-frequency resource that is configured by the base station for the UE when M=1 in an existing standard overlap, that different UEs contend for the PRACH time-frequency resource during uplink random access is easily caused. Consequently, a problem that a success rate of uplink random access by the UE is greatly decreased is caused. Therefore, in this embodiment of the present invention, the base station independently configures the PRACH time-frequency resource when M>1 and the PRACH time-frequency resource when M=1, thereby avoiding the problem that the success rate of uplink random access by the UE is greatly decreased because the PRACH time-frequency resource that is configured by the base station for the UE when M>1 and the PRACH time-frequency resource that is configured by the base station for the UE when M=1 in the existing standard overlap, and further improving a success rate of uplink random access when an uplink frequency offset is relatively large.

Further, as shown in FIG. 9, in this embodiment of the present invention, after the determining, by a base station, K available root sequences for uplink random access according to a preset policy (step S601) and before the performing, by the base station, uplink random access detection according to the $k^{th}$ available root sequence of the K available root sequences (step S602), the method may further include:

S606: The base station determines whether Q consecutive available root sequences exist in the K available root sequences, where Q is a quantity of random access sequences supported by a cellular.

$1 \leq Q \leq K$ and Q is an integer.

S607: If the Q consecutive available root sequences exist, the base station sends a sequence number of an initial available root sequence and a configuration message to the UE, where the sequence number of the initial available root sequence is a sequence number of the first available root sequence of the Q consecutive available root sequences, and the configuration message is used to indicate that $N_{CS}$ supports a non-limited set and $N_{CS}$ is configured to 0.

That is, in this embodiment of the present invention, the configuration message sent by the base station indicates that $N_{CS}$ supports a non-limited set and $N_{CS}$ is configured to 0, that is, it is represented that available root sequences determined when M=1 and these available root sequences overlap. Therefore, low-version UE is allowed to perform uplink random access by using these available root sequences, thereby better achieving backward compatibility.

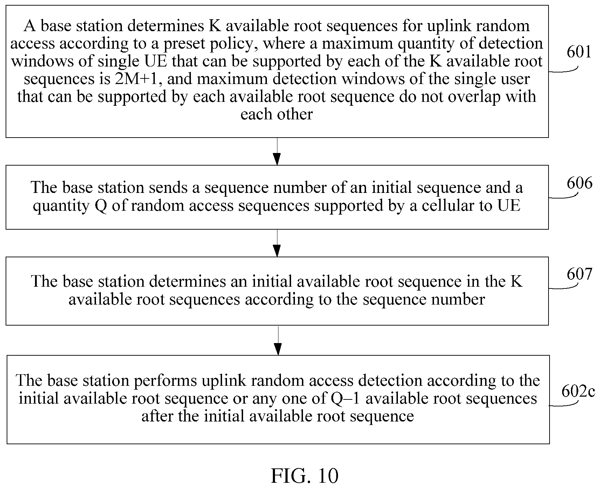

Further, as shown in FIG. 10, after the determining, by a base station, K available root sequences for uplink random access according to a preset policy (step S601) and before the performing, by the base station, uplink random access detection according to the k$^{th}$ available root sequence of the K available root sequences (step S602), the method may further include:

S608: The base station sends a sequence number of an initial sequence and a quantity Q of random access sequences supported by a cellular to the UE.

$Q \geq 1$ and Q is an integer.

Specifically, in this embodiment of the present invention, the sequence number of the initial sequence that is sent by the base station to the UE may be a sequence number of an available root sequence determined by the base station or may be a sequence number of a non-available root sequence. This is not specifically limited in this embodiment of the present invention.

S609: The base station determines an initial available root sequence in the K available root sequences according to the sequence number.

Specifically, in this embodiment of the present invention, after determining the sequence number sent to the UE, the base station may determine, in the K available root sequences, that the first available root sequence after the sequence number is the initial available root sequence. For example, if root sequences whose sequence numbers are 10, 12, 13, and 15 are non-available root sequences and the sequence number of the initial sequence that is sent by the base station to the UE is 12, the base station may determine that the initial available root sequence is an available root sequence whose root sequence number is 14.

Further, step S602 may specifically include:

S602c: The base station performs uplink random access detection according to the initial available root sequence or any one of Q-1 available root sequences after the initial available root sequence.

Specifically, in this embodiment of the present invention, the Q-1 available sequences after the initial available root sequence may specifically include root sequences, and may also include cyclic shift sequences of the root sequences that are obtained according to the foregoing method embodiments. This is not specifically limited in this embodiment of the present invention.

Based on the foregoing solution provided in this embodiment of the present invention, a base station may perform uplink random access sequence detection according to a sequence number of an initial sequence and a quantity Q of random access sequences supported by a cellular, thereby avoiding a problem that uplink random access by UE in a cell fails because the base station detects uplink random access sequences of UEs in other different cells during uplink random access sequence detection, and further improving a success rate of uplink random access when an uplink frequency offset is relatively large.

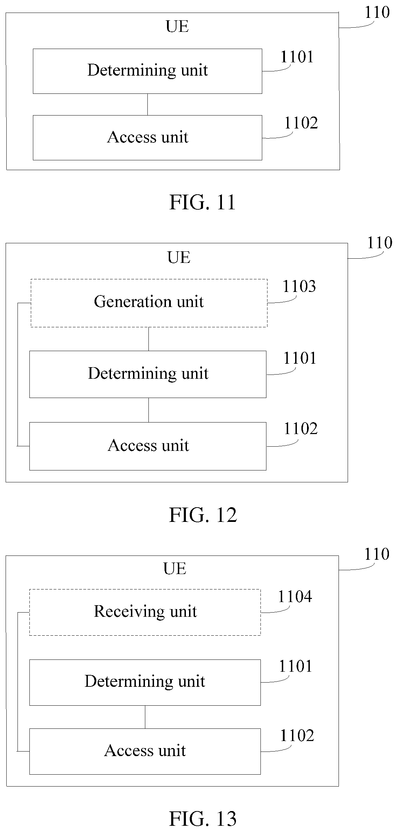

An embodiment of the present invention provides UE 110. As shown in FIG. 11, the UE 110 includes: a determining unit 1101 and an access unit 1102.

The determining unit 1101 is configured to determine K available root sequences for uplink random access according to a preset policy, where a maximum quantity of detection windows of single UE 110 that can be supported by each of the K available root sequences is 2M+1, and maximum detection windows of the single UE 110 that can be supported by each available root sequence do not overlap with each other, where $K \geq 1$, $M > 1$, and both K and M are integers.

The access unit 1102 is configured to perform uplink random access according to the k$^{th}$ available root sequence of the K available root sequences, where $1 \leq k \leq K$ and k is an integer.

In a possible implementation, the preset policy includes:

a root sequence satisfying none of the following condition A, condition B, and condition C is an available root sequence:

the condition A: any detection window $m \in \{-M,...,0,...,M\}$ of the single UE 110 satisfies the inequality (1);

the condition B: any detection windows $m_a$ and $m_b$ of the single UE 110, where $m_a \neq m_b$ and $m_a, m_b \in \{-M,...,0,...,M\}$, satisfy the inequality (2) and the inequality (3); and

the condition C: any detection windows $m_a$ and $m_b$ of the single UE 110, where $m_a \neq m_b$ and $m_a, m_b \in \{-M,...,0,...,M\}$, satisfy the inequality (4) and the inequality (5).

Further, as shown in FIG. 12, the UE 110 further includes a generation unit 1103.

The determining unit 1101 is further configured to: after determining the K available root sequences for uplink random access according to the preset policy, determine start locations of cyclic shift sequences of the K available root sequences, where the start locations of the cyclic shift sequences of the K available root sequences include start locations of N cyclic shift sequences of the $k^{th}$ available root sequence, the start locations of the N cyclic shift sequences include a start location of the $n^{th}$ cyclic shift sequence, and $N \times (2M+1)$ detection windows corresponding to the start locations of the N cyclic shift sequences do not overlap with each other, where $1 \leq n \leq N$, $N \geq 1$, N indicates a quantity of cyclic shift sequences of the $k^{th}$ available root sequence, and both n and N are integers.

The generation unit 1103 is configured to perform cyclic shift on the $k^{th}$ available root sequence according to the start location of the $n^{th}$ cyclic shift sequence, to obtain the $n^{th}$ cyclic shift sequence of the $k^{th}$ available root sequence, where magnitude of the cyclic shift is $(d_{start_n}+a) \bmod N_{ZC}$; and $a$ is a preset integer value.

The access unit 1102 is specifically configured to:

perform uplink random access according to the $k^{th}$ available root sequence of the K available root sequences or the $n^{th}$ cyclic shift sequence of the $k^{th}$ available root sequence.

Preferably, $a$ is prestored by the UE 110 or is sent by the base station to the UE 110.

In a possible implementation, the determining unit 1101 is specifically configured to:

obtain a start location of a detection window of the $n^{th}$ cyclic shift sequence according to the formula (2);

obtain an end location of the detection window of the $n^{th}$ cyclic shift sequence according to the formula (3), where $d_{start,1}=0$ and $d_{start,n}=d_{start,n-1}+N_{CS}$;

determine, for any $d_{start,l} \in v$, whether a detection window corresponding to $d_{start,n}$ and a detection window corresponding to $d_{start,l}$, overlap, where $v$ indicates a set of start locations of detection windows, and an initial set of $v$ is $v=\{d_{start,1}\}$;

if the detection window corresponding to $d_{start,n}$ and the detection window corresponding to $d_{start,l}$ do not overlap, determine that the start location of the $n^{th}$ cyclic shift sequence is $d_{start,n}$ and add $d_{start,n}$ to $v$; and

if the detection window corresponding to $d_{start,n}$ and the detection window corresponding to $d_{start,l}$ overlap, assume $d_{start,n}=d_{start,n}+1$ and repeatedly perform the foregoing steps until $d_{start,n} \geq N_{ZC}-N_{CS}$.

Preferably, a configuration parameter is prestored by the UE 110 or is sent by the base station to the UE 110, where the configuration parameter include at least one of the following parameters: M, $N_{ZC}$, or $N_{CS}$.

Further, as shown in FIG. 13, the UE 110 further includes a receiving unit 1104.

The receiving unit 1104 is configured to: before the access unit 1102 performs uplink random access according to the $k^{th}$ available root sequence of the K available root sequences, receive a physical random access channel PRACH time-frequency resource sent by the base station, where the PRACH time-frequency resource and a PRACH time-frequency resource that is configured by the base station for the UE 110 when M=1 are configured independently.

The access unit 1102 is specifically configured to:

perform uplink random access on the PRACH according to the $k^{th}$ available root sequence of the K available root sequences.

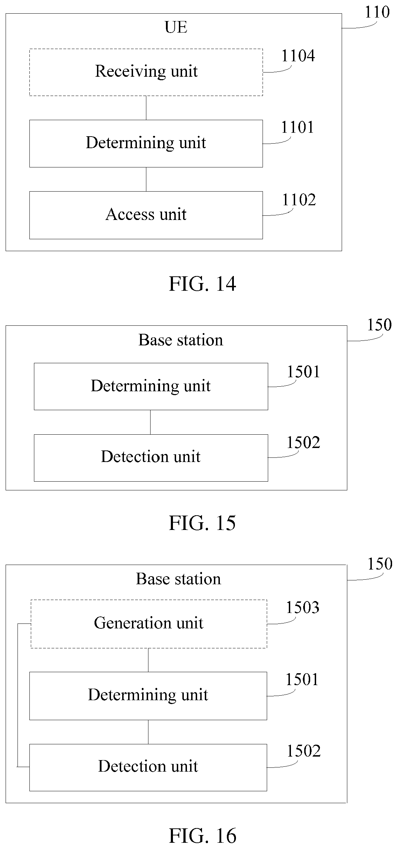

Further, as shown in FIG. 14, the UE 110 further includes a receiving unit 1104.

The receiving unit 1104 is configured to: after the determining unit 1101 determines the K available root sequences for uplink random access according to the preset policy and before the access unit 1102 performs uplink random access according to the $k^{th}$ available root sequence of the K available root sequences, receive a sequence number of an initial sequence and a quantity Q of random access sequences supported by a cellular that are sent by the base station, where $Q \geq 1$ and Q is an integer.

The determining unit 1101 is further configured to determine an initial available root sequence in the K available root sequences according to the sequence number.

The access unit 1102 is specifically configured to:

perform uplink random access according to the initial available root sequence or any available root sequence of Q-1 available sequences after the initial available root sequence.

Specifically, for a method for performing uplink random access by the UE 110 shown in FIG. 11 to FIG. 14, refer to the foregoing method embodiments, and details are not described in this embodiment of the present invention again.

It should be noted that in FIG. 12 to FIG. 14, units indicated by dashed lines are newly added units based on FIG. 11, and these units are optional units. This is not specifically limited in this embodiment of the present invention.

In the embodiments of the UE 110 shown in FIG. 11 to FIG. 14, the receiving unit 1104 may be implemented by a receiver; the determining unit 1101, the access unit 1102, and the generation unit 1103 may be implemented by a processor. Functions of the foregoing units or steps performed by the foregoing units may be correspondingly completed by the processor. The receiver and the processor may communicate with each other. This is not specifically limited in this embodiment of the present invention.

Because the UE 110 shown in FIG. 11 to FIG. 14 can be configured to perform the foregoing methods, for technical effects that can be achieved by the UE 110, refer to descriptions of the foregoing method embodiments, and details are not described herein again.

An embodiment of the present invention further provides a base station 150. As shown in FIG. 15, the base station 150 includes: a determining unit 1501 and a detection unit 1502.

The determining unit 1501 is configured to determine K available root sequences for uplink random access according to a preset policy, where a maximum quantity of detection windows of single UE that can be supported by each of the K available root sequences is 2M+1, and maximum detection windows of the single UE that can be supported by each available root sequence do not overlap with each other, where $K \geq 1$, $M > 1$, and both K and M are integers.

The detection unit 1502 is configured to perform uplink random access detection according to the $k^{th}$ available root sequence of the K available root sequences, where $1 \leq k \leq K$ and k is an integer.

In a possible implementation, the preset policy includes:

a root sequence satisfying none of the following condition A, condition B, and condition C is an available root sequence:

the condition A: any detection window $m \in \{-M,...,0,...,M\}$ of the single UE satisfies the inequality (1);

the condition B: any detection windows $m_a$ and $m_b$ of the single UE, where $m_a \neq m_b$ and $m_a, m_b \in \{-M,...,0,...,M\}$, satisfy the inequality (2) and the inequality (3); and

the condition C: any detection windows $m_a$ and $m_b$ of the single UE, where $m_a \neq m_b$ and $m_a, m_b \in \{-M,...,0,...,M\}$, satisfy the inequality (4) and the inequality (5).

Further, as shown in FIG. 16, the base station 150 further includes a generation unit 1503.

The determining unit 1501 is further configured to: after determining the K available root sequences for uplink random access according to the preset policy, determine start locations of cyclic shift sequences of the K available root sequences, where the start locations of the cyclic shift sequences of the K available root sequences include start locations of N cyclic shift sequences of the $k^{th}$ available root sequence, the start locations of the N cyclic shift sequences include a start location of the $n^{th}$ cyclic shift sequence, and $N \times (2M+1)$ detection windows corresponding to the start locations of the N cyclic shift sequences do not overlap with each other, where $1 \leq n \leq N$, $N \geq 1$, N indicates a quantity of cyclic shift sequences of the $k^{th}$ available root sequence, and both n and N are integers.

The generation unit 1503 is configured to perform cyclic shift on the $k^{th}$ available root sequence according to the start location of the $n^{th}$ cyclic shift sequence, to obtain the $n^{th}$ cyclic shift sequence of the $k^{th}$ available root sequence, where magnitude of the cyclic shift is $(d_{start,n} + a) \bmod N_{ZC}$; and $a$ is a preset integer value.

The detection unit 1502 is specifically configured to:

perform uplink random access detection according to the $k^{th}$ available root sequence of the K available root sequences or the $n^{th}$ cyclic shift sequence of the $k^{th}$ available root sequence.

Further, the determining unit 1501 is specifically configured to:

obtain a start location of a detection window of the $n^{th}$ cyclic shift sequence according to the formula (2);
obtain an end location of the detection window of the $n^{th}$ cyclic shift sequence according to the formula (3), where $d_{start,1} = 0$ and $d_{start,n} = d_{start,n-1} + N_{CS}$;

determine, for any $d_{start,l} \in v$, whether a detection window corresponding to $d_{start,n}$ and a detection window corresponding to $d_{start,l}$ overlap, where $v$ indicates a set of start locations of detection windows, and an initial set of $v$ is $v=\{d_{start,1}\}$;

if the detection window corresponding to $d_{start,n}$ and the detection window corresponding to $d_{start,l}$ do not overlap, determine that the start location of the $n^{th}$ cyclic shift sequence is $d_{start,n}$ and add $d_{start,n}$ to $v$, and

if the detection window corresponding to $d_{start,n}$ and the detection window corresponding to $d_{start,l}$ overlap, assume $d_{start,n}=d_{start,n}+1$ and repeatedly perform the foregoing steps until $d_{start,n} \geq N_{ZC}-N_{CS}$.

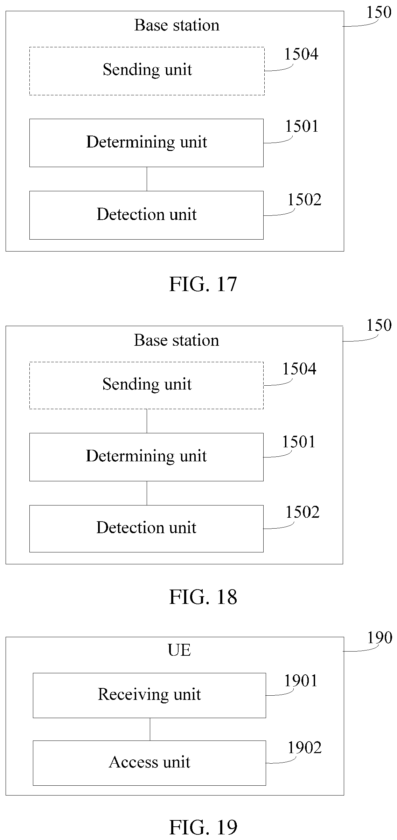

Further, as shown in FIG. 17, the base station 150 further includes a sending unit 1504.

The sending unit 1504 is configured to: before the detection unit 1502 performs uplink random access detection according to the $k^{th}$ available root sequence of the K available root sequences, send a physical random access channel PRACH time-frequency resource to user equipment UE, where the PRACH time-frequency resource and a PRACH time-frequency resource that is configured by the base station 150 for the UE when M=1 are configured independently.

The detection unit 1502 is specifically configured to:

perform uplink random access detection on the PRACH according to the $k^{th}$ available root sequence of the K available root sequences.

Further, as shown in FIG. 18, the base station 150 further includes a sending unit 1504.

The sending unit 1504 is configured to: after the determining unit 1501 determines the K available root sequences for uplink random access according to the preset policy and before the detection unit 1502 performs uplink random access detection according to the $k^{th}$ available root sequence of the K available root sequences, send a sequence number of an initial sequence and a quantity Q of random access sequences supported by a cellular to the UE, where $Q \geq 1$ and Q is an integer;

The determining unit 1501 is further configured to determine an initial available root sequence in the K available root sequences according to the sequence number.

The detection unit 1502 is specifically configured to:

perform uplink random access detection according to the initial available root sequence or any one of Q-1 available root sequences after the initial available root sequence.

Further, as shown in FIG. 18, the base station 150 further includes a sending unit 1504.

The determining unit 1501 is further configured to: after the determining unit 1501 determines the K available root sequences for uplink random access according to the preset policy and before the detection unit 1502 performs uplink random access detection according to the $k^{th}$ available root sequence of the K available root sequences, determine whether Q consecutive available root sequences exist in the K available root sequences, where Q is a quantity of random access sequences supported by a cellular, where $1 \leq Q \leq K$ and Q is an integer.

The sending unit 1504 is configured to: if the Q consecutive available root sequences exist, send a sequence number of an initial available root sequence and a configuration message to the UE, where the sequence number of the initial available root sequence is a sequence number of the first available root sequence of the Q consecutive available root sequences, and the configuration message is used to indicate that $N_{CS}$ supports a non-limited set and $N_{CS}$ is configured to 0, where $N_{CS}$ indicates a length of an uplink detection window.

Specifically, for a method for performing uplink random access by the base station 150 shown in FIG. 15 to FIG. 18, refer to the foregoing method embodiments, and details are not described in this embodiment of the present invention again.

It should be noted that in FIG. 16 to FIG. 18, units indicated by dashed lines are newly added units based on FIG. 15, and these units are optional units. This is not specifically limited in this embodiment of the present invention. Similarly, in this specification, dashed lines in the figures all indicate similar meanings, and details are not described herein again.

In the embodiments of the base station 150 shown in FIG. 15 to FIG. 18, the sending unit 1504 may be implemented by a transmitter; the determining unit 1501, the access unit, and the generation unit 1503 may be implemented by a processor. Functions of the foregoing units or steps performed by the foregoing units may be correspondingly completed by the processor. The transmitter and the processor may communicate with each other. This is not specifically limited in this embodiment of the present invention.

Because the base station 150 shown in FIG. 15 to FIG. 18 can be configured to perform the foregoing methods, for technical effects that can be achieved by the base station 150, refer to descriptions of the foregoing method embodiments, and details are not described herein again.

An embodiment of the present invention further provides UE 190. As shown in FIG. 19, the UE 190 includes:

a receiving unit 1901 and an access unit 1902.

The receiving unit 1901 is configured to receive a sequence number of an initial available root sequence and a configuration message that are sent by a base station, where a maximum quantity of detection windows of single UE 190 that can be supported by the initial available root sequence is 2M+1, maximum detection windows of the single UE 190 that can be supported by the initial available root sequence do not overlap with each other, and the configuration message is used to indicate that $N_{CS}$ supports a non-limited set and $N_{CS}$ is configured to 0, where $N_{CS}$ indicates a length of an uplink detection window, M>1, and M is an integer.

The access unit 1902 is configured to perform, according to the sequence number and the configuration message, random access on the initial available root sequence or any available root sequence of Q-1 consecutive root sequences after the initial available root sequence, where a maximum quantity of detection windows of the single UE 190 that can be supported by any one of the Q-1 root sequences is 2M+1, and maximum detection windows of the single UE 190 that can be supported by any one of the Q-1 root sequences do not overlap with each other, where Q is a quantity of random access sequences supported by a cellular, Q≥1, and Q is an integer.

Specifically, for a method for performing uplink random access shown by the UE 190 shown in FIG. 19, refer to the foregoing method embodiments, and details are not described in this embodiment of the present invention again.

In the embodiment of the UE 190 shown in FIG. 19, the receiving unit 1901 may be implemented by a receiver; the access unit 1902 may be implemented by a processor. Functions of the foregoing units or steps performed by the foregoing units may be correspondingly completed by the processor. The receiver and the processor may communicate with each other. This is not specifically limited in this embodiment of the present invention.

Because the UE 190 shown in FIG. 19 can be configured to perform the foregoing methods, for technical effects that can be achieved by the UE 190, refer to descriptions of the foregoing method embodiments, and details are not described herein again.

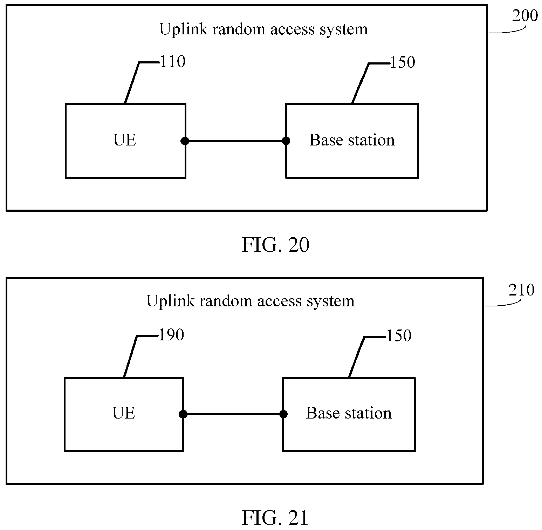

Corresponding to the foregoing method embodiments, an embodiment of the present invention further provides an uplink random access system 200. As shown in FIG. 20, the uplink random access system 200 includes the UE 110 shown in FIG. 11 to FIG. 14 and the base station 150 shown in FIG. 15 to FIG. 18.

Specifically, for a method for performing uplink random access by the uplink random access system 200 provided in this embodiment of the present invention, refer to descriptions of the foregoing method embodiments, and details are not described herein again.

Because the uplink random access system 200 provided in this embodiment of the present invention can be configured to perform the foregoing methods, for technical effects that can be achieved by the uplink random access system 200, refer to descriptions of the foregoing method embodiments, and details are not described herein again.

Corresponding to the foregoing method embodiments, an embodiment of the present invention further provides an uplink random access system 210. As shown in FIG. 21, the uplink random access system 210 includes the UE 190 shown in FIG. 19 and the base station 150 shown in FIG. 15 to FIG. 18.

Specifically, for a method for performing uplink random access by the uplink random access system 210 provided in this embodiment of the present invention, refer to descriptions of the foregoing method embodiments, and details are not described herein again.

Because the uplink random access system 210 provided in this embodiment of the present invention can be configured to perform the foregoing methods, for technical effects that can be achieved by the uplink random access system 210, refer to descriptions of the foregoing method embodiments, and details are not described herein again.

A person skilled in the art should be aware that in the foregoing one or more examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. User equipment UE, wherein the UE comprises: a determining unit and an access unit, wherein
   the determining unit is configured to determine K available root sequences for uplink random access according to a preset policy, wherein a maximum quantity of detection windows of single UE that can be supported by each of the K available root sequences is 2M+1, and maximum detection windows of the single UE that can be supported by each available root sequence do not overlap with each other, wherein K≥1, M is a detection window parameter, M>1, and both K and M are integers; and

the access unit is configured to perform uplink random access according to the $k^{th}$ available root sequence of the K available root sequences, wherein 1≤k≤K and k is an integer.

2. The UE according to claim 1, wherein the preset policy comprises:

a root sequence satisfying none of the following condition A, condition B, and condition C is an available root sequence:

the condition A: any detection window $m \in \{-M,...,0,...,M\}$ of the single UE satisfies:

$$(m \times d_u + N_{CS} - 1) \bmod N_{ZC} < (m \times d_u) \bmod N_{ZC} ;$$

the condition B: any detection windows $m_a$ and $m_b$ of the single UE, wherein $m_a \neq m_b$ and $m_a, m_b \in \{-M,...,0,...,M\}$, satisfy:

$$(m_a \times d_u) \bmod N_{ZC} \leq (m_b \times d_u) \bmod N_{ZC} ,$$

and

$$(m_a \times d_u + N_{CS} - 1) \bmod N_{ZC} \geq (m_b \times d_u) \bmod N_{ZC} ;$$

and
the condition C: any detection windows $m_a$ and $m_b$ of the single UE, wherein $m_a \neq m_b$ and $m_a, m_b \in \{-M,...,0,...,M\}$, satisfy:

$$(m_b \times d_u + N_{CS} - 1) \bmod N_{ZC} \geq (m_a \times d_u) \bmod N_{ZC} ,$$

and

$$(m_b \times d_u + N_{CS} - 1) \bmod N_{ZC} \leq (m_a \times d_u + N_{CS} - 1) \bmod N_{ZC} ,$$

wherein

$$d_u = \begin{cases} p & 0 \leq p \leq N_{ZC}/2 \\ N_{ZC} - p & \text{others} \end{cases} ;$$

$p$ is a minimum non-negative integer satisfying $(p \times u) \bmod N_{ZC} = 1$; $u$ indicates a root sequence generation parameter; a root sequence is $x_u(n) = e^{\frac{-jun(n+1)}{N_{ZC}}}$; $d_u$ indicates an offset of a peak generated when a subcarrier is shifted; $N_{ZC}$ indicates a length of an uplink access root sequence; $N_{CS}$ indicates a length of an uplink detection window; 2M+1 indicates the maximum quantity of detection windows of the single UE that can be supported by the available root sequence; $m$, $m_a$, and $m_b$ indicate any detection windows of the single UE; and mod indicates a modulo operation.

3. The UE according to claim 1 or 2, wherein the UE further comprises a generation unit, wherein
the determining unit is further configured to: after determining the K available root sequences for uplink random access according to the preset policy, determine start locations of cyclic shift sequences of the K available root sequences, wherein the start locations of the cyclic shift sequences of the K available root sequences comprise start locations of N cyclic shift sequences of the k$^{th}$ available root sequence, the start locations of the N cyclic shift sequences comprise a start location of the n$^{th}$ cyclic shift sequence, and N × (2M+1) detection windows corresponding to the start locations of the N cyclic shift sequences do not overlap with each other, wherein 1≤n≤N, N≥1, N indicates a quantity of cyclic shift sequences of the k$^{th}$ available root sequence, and both n and N are integers;

the generation unit is configured to perform cyclic shift on the k$^{th}$ available root sequence according to the start location of the n$^{th}$ cyclic shift sequence, to obtain the n$^{th}$ cyclic shift sequence of the k$^{th}$ available root sequence, wherein magnitude of the cyclic shift is $(d_{start,n}$+a)mod $N_{ZC}$; $d_{start,n}$ is the start location of the n$^{th}$ cyclic shift sequence; $N_{ZC}$ indicates a length of an uplink access root sequence; mod indicates a modulo operation; and a is a preset integer value; and

the access unit is specifically configured to:

  perform uplink random access according to the k$^{th}$ available root sequence of the K available root sequences or the n$^{th}$ cyclic shift sequence of the k$^{th}$ available root sequence.

4. The UE according to claim 3, wherein a is prestored by the UE or is sent by the base station to the UE.

5. The UE according to claim 3 or 4, wherein the determining unit is specifically configured to:

  obtain a start location of a detection window of the n$^{th}$ cyclic shift sequence according to a first formula, wherein the first formula comprises:

$$d_{start,n1} = (d_{start,n} + m \times d_u) \bmod N_{ZC};$$

  obtain an end location of the detection window of the n$^{th}$ cyclic shift sequence according to a second formula, wherein the second formula comprises:

$$d_{start,n2} = (d_{start,n} + m \times d_u + N_{CS} - 1) \bmod N_{ZC},$$

  wherein

$$d_{start,1} = 0 \; ; \quad d_{start,n} = d_{start,n-1} + N_{CS} \; ; \quad d_u = \{ \begin{array}{ll} p & 0 \le p \le N_{ZC}/2 \\ N_{ZC} - p & \text{others} \end{array} \; ;$$

  p is a minimum non-negative integer satisfying $(p \times u)$mod $N_{ZC}$=1; $d_u$ indicates an offset of a peak generated when a subcarrier is shifted; $N_{ZC}$ indicates a length of an uplink access root sequence; $N_{CS}$ indicates a length of an uplink detection window; d indicates the start location of the detection window of the n$^{th}$ cyclic shift sequence; and d indicates the end location of the detection window of the n$^{th}$ cyclic shift sequence;

  determine, for any $d_{start,l} \in v$, whether a detection window corresponding to $d_{start,n}$ and a detection window corresponding to $d_{start,l}$ overlap, wherein v indicates a set of start locations of detection windows, and an initial set of v is $v$={$d_{start,1}$};

  if the detection window corresponding to $d_{start,n}$ and the detection window corresponding to $d_{start,l}$ do not overlap, determine that the start location of the n$^{th}$ cyclic shift sequence is $d_{start,n}$ and add $d_{start,n}$ to v; and

  if the detection window corresponding to $d_{start,n}$ and the detection window corresponding to $d_{start,l}$ overlap, assume $d_{start,n}$=$d_{start,n}$+1 and repeatedly perform the foregoing steps until $d_{start,n} \ge N_{ZC}$-$N_{CS}$.

6. The UE according to claim 5, wherein a configuration parameter is prestored by the UE or is sent by the base station to the UE, wherein the configuration parameter comprises at least one of the following parameters: M, $N_{ZC}$, or $N_{CS}$.

7. The UE according to any one of claims 1 to 6, wherein the UE further comprises a receiving unit, wherein the receiving unit is configured to: before the access unit performs uplink random access according to the k$^{th}$ available root sequence of the K available root sequences, receive a physical random access channel PRACH time-frequency resource sent by the base station, wherein the PRACH time-frequency resource and a PRACH time-frequency resource that is configured by the base station for the UE when M=1 are configured independently; and the access unit is specifically configured to:

perform uplink random access on the PRACH according to the $k^{th}$ available root sequence of the K available root sequences.

8. The UE according to any one of claims 1 to 7, wherein the UE further comprises a receiving unit, wherein the receiving unit is configured to: after the determining unit determines the K available root sequences for uplink random access according to the preset policy and before the access unit performs uplink random access according to the $k^{th}$ available root sequence of the K available root sequences, receive a sequence number of an initial sequence and a quantity Q of random access sequences supported by a cellular that are sent by the base station, wherein $Q \geq 1$ and Q is an integer; the determining unit is further configured to determine an initial available root sequence in the K available root sequences according to the sequence number; and the access unit is specifically configured to:

perform uplink random access according to the initial available root sequence or any available root sequence of Q-1 available sequences after the initial available root sequence.

9. A base station, wherein the base station comprises: a determining unit and a detection unit, wherein the determining unit is configured to determine K available root sequences for uplink random access according to a preset policy, wherein a maximum quantity of detection windows of single UE that can be supported by each of the K available root sequences is 2M+1, and maximum detection windows of the single UE that can be supported by each available root sequence do not overlap with each other, wherein $K \geq 1$, M is a detection window parameter, M>1, and both K and M are integers; and the detection unit is configured to perform uplink random access detection according to the $k^{th}$ available root sequence of the K available root sequences, wherein $1 \leq k \leq K$ and k is an integer.

10. The base station according to claim 9, wherein the preset policy comprises:

a root sequence satisfying none of the following condition A, condition B, and condition C is an available root sequence:

the condition A: any detection window $m \in \{-M,...,0,...,M\}$ of the single UE satisfies:

$$(m \times d_u + N_{CS} - 1) \bmod N_{ZC} < (m \times d_u) \bmod N_{ZC} ;$$

the condition B: any detection windows $m_a$ and $m_b$ of the single UE, wherein $m_a \neq m_b$ and $m_a, m_b \in \{-M,...,0,...,M\}$, satisfy:

$$(m_a \times d_u) \bmod N_{ZC} \leq (m_b \times d_u) \bmod N_{ZC} ,$$

and

$$(m_a \times d_u + N_{CS} - 1) \bmod N_{ZC} \geq (m_b \times d_u) \bmod N_{ZC} ;$$

and
the condition C: any detection windows $m_a$ and $m_b$ of the single UE, wherein $m_a \neq m_b$ and $m_a, m_b \in \{-M,...,0,...,M\}$, satisfy:

$$(m_b \times d_u + N_{CS} - 1) \bmod N_{ZC} \geq (m_a \times d_u) \bmod N_{ZC} ,$$

and

$$(m_b \times d_u + N_{CS} - 1) \bmod N_{ZC} \leq (m_a \times d_u + N_{CS} - 1) \bmod N_{ZC} \, ,$$

wherein

$$d_u = \{ \begin{array}{ll} p & 0 \leq p \leq N_{ZC}/2 \\ N_{ZC} - p & \text{others} \end{array} ;$$

$p$ is a minimum non-negative integer satisfying $(p \times u) \bmod N_{ZC} = 1$; $u$ indicates a root sequence generation parameter; a root sequence is $x_u(n) = e^{\frac{-jun(n+1)}{N_{ZC}}}$; $d_u$ indicates an offset of a peak generated when a subcarrier is shifted; $N_{ZC}$ indicates a length of an uplink access root sequence; $N_{CS}$ indicates a length of an uplink detection window; 2M+1 indicates the maximum quantity of detection windows of the single UE that can be supported by the available root sequence; $m$, $m_a$, and $m_b$ indicate any detection windows of the single UE; and mod indicates a modulo operation.

11. The base station according to claim 9 or 10, wherein the base station further comprises a generation unit, wherein the determining unit is further configured to: after determining the K available root sequences for uplink random access according to the preset policy, determine start locations of cyclic shift sequences of the K available root sequences, wherein the start locations of the cyclic shift sequences of the K available root sequences comprise start locations of N cyclic shift sequences of the $k^{th}$ available root sequence, the start locations of the N cyclic shift sequences comprise a start location of the $n^{th}$ cyclic shift sequence, and N × (2M+1) detection windows corresponding to the start locations of the N cyclic shift sequences do not overlap with each other, wherein $1 \leq n \leq N$, $N \geq 1$, N indicates a quantity of cyclic shift sequences of the $k^{th}$ available root sequence, and both n and N are integers;
the generation unit is configured to perform cyclic shift on the $k^{th}$ available root sequence according to the start location of the $n^{th}$ cyclic shift sequence, to obtain the $n^{th}$ cyclic shift sequence of the $k^{th}$ available root sequence, wherein magnitude of the cyclic shift is $(d_{start,n}+a) \bmod N_{ZC}$; $d_{start,n}$ is the start location of the $n^{th}$ cyclic shift sequence; $N_{ZC}$ indicates a length of an uplink access root sequence; mod indicates a modulo operation; and $a$ is a preset integer value; and
the detection unit is specifically configured to:

perform uplink random access detection according to the $k^{th}$ available root sequence of the K available root sequences or the $n^{th}$ cyclic shift sequence of the $k^{th}$ available root sequence.

12. The base station according to claim 11, wherein the determining unit is specifically configured to:

obtain a start location of a detection window of the $n^{th}$ cyclic shift sequence according to a first formula, wherein the first formula comprises:

$$d_{start,n1} = (d_{start,n} + m \times d_u) \bmod N_{ZC} \, ;$$

obtain an end location of the detection window of the $n^{th}$ cyclic shift sequence according to a second formula, wherein the second formula comprises:

$$d_{start,n2} = (d_{start,n} + m \times d_u + N_{CS} - 1) \bmod N_{ZC} \, ,$$

wherein

$$d_{start,1} = 0 \quad ; \quad d_{start,n} = d_{start,n-1} + N_{CS} \quad ; \quad d_u = \{ \begin{array}{ll} p & 0 \le p \le N_{ZC}/2 \\ N_{ZC} - p & \text{others} \end{array} \quad ;$$

$p$ is a minimum non-negative integer satisfying $(p \times u) \bmod N_{ZC} = 1$; $d_u$ indicates an offset of a peak generated when a subcarrier is shifted; $N_{ZC}$ indicates a length of an uplink access root sequence; $N_{CS}$ indicates a length of an uplink detection window; $d_{start,n1}$ indicates the start location of the detection window of the $n^{th}$ cyclic shift sequence; and $d_{start,n2}$ indicates the end location of the detection window of the $n^{th}$ cyclic shift sequence;

determine, for any $d_{start,l} \in v$, whether a detection window corresponding to $d_{start,n}$ and a detection window corresponding to $d_{start,l}$ overlap, wherein $v$ indicates a set of start locations of detection windows, and an initial set of $v$ is $v = \{d_{start,1}\}$;

if the detection window corresponding to $d_{start,n}$ and the detection window corresponding to $d_{start,l}$ do not overlap, determine that the start location of the $n^{th}$ cyclic shift sequence is $d_{start,n}$ and add $d_{start,n}$ to $v$; and

if the detection window corresponding to $d_{start,n}$ and the detection window corresponding to $d_{start,l}$ overlap, assume $d_{start,n} = d_{start,n} + 1$ and repeatedly perform the foregoing steps until $d_{start,n} \ge N_{ZC} - N_{CS}$.

13. The base station according to any one of claims 9 to 12, wherein the base station further comprises a sending unit, wherein

the sending unit is configured to: before the detection unit performs uplink random access detection according to the $k^{th}$ available root sequence of the K available root sequences, send a physical random access channel PRACH time-frequency resource to user equipment UE, wherein the PRACH time-frequency resource and a PRACH time-frequency resource that is configured by the base station for the UE when M=1 are configured independently; and

the detection unit is specifically configured to:

perform uplink random access detection on the PRACH according to the $k^{th}$ available root sequence of the K available root sequences.

14. The base station according to any one of claims 9 to 13, wherein the base station further comprises a sending unit, wherein

the sending unit is configured to: after the determining unit determines the K available root sequences for uplink random access according to the preset policy and before the detection unit performs uplink random access detection according to the $k^{th}$ available root sequence of the K available root sequences, send a sequence number of an initial sequence and a quantity Q of random access sequences supported by a cellular to the UE, wherein Q≥1 and Q is an integer;

the determining unit is further configured to determine an initial available root sequence in the K available root sequences according to the sequence number; and

the detection unit is specifically configured to:

perform uplink random access detection according to the initial available root sequence or any one of Q-1 available root sequences after the initial available root sequence.

15. The base station according to any one of claims 9 to 14, wherein the base station further comprises a sending unit, wherein

the determining unit is further configured to: after the determining unit determines the K available root sequences for uplink random access according to the preset policy and before the detection unit performs uplink random access detection according to the $k^{th}$ available root sequence of the K available root sequences, determine whether Q consecutive available root sequences exist in the K available root sequences, wherein Q is a quantity of random access sequences supported by a cellular, 1≤Q≤K, and Q is an integer; and

the sending unit is configured to: if the Q consecutive available root sequences exist, send a sequence number of an initial available root sequence and a configuration message to the UE, wherein the sequence number of the initial available root sequence is a sequence number of the first available root sequence of the Q consecutive available root sequences, and the configuration message is used to indicate that $N_{CS}$ supports a non-limited set and $N_{CS}$ is configured to 0, wherein $N_{CS}$ indicates a length of an uplink detection window.

16. User equipment UE, wherein the UE comprises: a receiving unit and an access unit, wherein

the receiving unit is configured to receive a sequence number of an initial available root sequence and a configuration message that are sent by a base station, wherein a maximum quantity of detection windows of single UE that can be supported by the initial available root sequence is 2M+1, maximum detection windows of the single UE that can be supported by the initial available root sequence do not overlap with each other, and the configuration message is used to indicate that $N_{CS}$ supports a non-limited set and $N_{CS}$ is configured to 0, wherein $N_{CS}$ indicates a length of an uplink detection window, M is a detection window parameter, M>1, and M is an integer; and

the access unit is configured to perform, according to the sequence number and the configuration message, random access on the initial available root sequence or any available root sequence of Q-1 consecutive root sequences after the initial available root sequence, wherein a maximum quantity of detection windows of the single UE that can be supported by any one of the Q-1 root sequences is 2M+1, and maximum detection windows of the single UE that can be supported by any one of the Q-1 root sequences do not overlap with each other, wherein Q is a quantity of random access sequences supported by a cellular, Q≥1, and Q is an integer.

17. An uplink random access method, wherein the method comprises:

determining, by user equipment UE, K available root sequences for uplink random access according to a preset policy, wherein a maximum quantity of detection windows of single UE that can be supported by each of the K available root sequences is 2M+1, and maximum detection windows of the single UE that can be supported by each available root sequence do not overlap with each other, wherein K≥1, M is a detection window parameter, M>1, and both K and M are integers; and

performing, by the UE, uplink random access according to the kth available root sequence of the K available root sequences, wherein 1≤k≤K and k is an integer.

18. The method according to claim 17, wherein the preset policy comprises:

a root sequence satisfying none of the following condition A, condition B, and condition C is an available root sequence:

the condition A: any detection window $m \in \{-M,...,0,...,M\}$ of the single UE satisfies:

$$(m \times d_u + N_{CS} - 1) \bmod N_{ZC} < (m \times d_u) \bmod N_{ZC};$$

the condition B: any detection windows $m_a$ and $m_b$ of the single UE, wherein $m_a \neq m_b$ and $m_a, m_b \in \{-M,...,0,...,M\}$, satisfy:

$$(m_a \times d_u) \bmod N_{ZC} \leq (m_b \times d_u) \bmod N_{ZC},$$

and

$$(m_a \times d_u + N_{CS} - 1) \bmod N_{ZC} \geq (m_b \times d_u) \bmod N_{ZC};$$

and
the condition C: any detection windows $m_a$ and $m_b$ of the single UE, wherein $m_a \neq m_b$ and $m_a, m_b \in \{-M,...,0,...,M\}$, satisfy:

$$(m_b \times d_u + N_{CS} - 1) \bmod N_{ZC} \geq (m_a \times d_u) \bmod N_{ZC},$$

and

$$(m_b \times d_u + N_{CS} - 1) \bmod N_{ZC} \leq (m_a \times d_u + N_{CS} - 1) \bmod N_{ZC},$$

wherein

$$d_u = \{ \begin{array}{ll} p & 0 \le p \le N_{ZC}/2 \\ N_{ZC} - p & \text{others} \end{array} ;$$

$p$ is a minimum non-negative integer satisfying $(p \times u) \bmod N_{ZC} = 1$; $u$ indicates a root sequence generation parameter; a root sequence is $x_u(n) = e^{\frac{-jun(n+1)}{N_{ZC}}}$; $d_u$ indicates an offset of a peak generated when a subcarrier is shifted; $N_{ZC}$ indicates a length of an uplink access root sequence; $N_{CS}$ indicates a length of an uplink detection window; 2M+1 indicates the maximum quantity of detection windows of the single UE that can be supported by the available root sequence; $m$, $m_a$, and $m_b$ indicate any detection windows of the single UE; and mod indicates a modulo operation.

19. The method according to claim 17 or 18, wherein after the determining, by UE, K available root sequences for uplink random access according to a preset policy, the method further comprises:

determining, by the UE, start locations of cyclic shift sequences of the K available root sequences, wherein the start locations of the cyclic shift sequences of the K available root sequences comprise start locations of N cyclic shift sequences of the $k^{th}$ available root sequence, the start locations of the N cyclic shift sequences comprise a start location of the $n^{th}$ cyclic shift sequence, and $N \times (2M+1)$ detection windows corresponding to the start locations of the N cyclic shift sequences do not overlap with each other, wherein $1 \le n \le N$, $N \ge 1$, N indicates a quantity of cyclic shift sequences of the $k^{th}$ available root sequence, and both n and N are integers; and

performing, by the UE, cyclic shift on the $k^{th}$ available root sequence according to the start location of the $n^{th}$ cyclic shift sequence, to obtain the $n^{th}$ cyclic shift sequence of the $k^{th}$ available root sequence, wherein magnitude of the cyclic shift is $(d_{start,n}+a) \bmod N_{ZC}$; $d_{start,n}$ is the start location of the $n^{th}$ cyclic shift sequence; $N_{ZC}$ indicates a length of an uplink access root sequence; mod indicates a modulo operation; and $a$ is a preset integer value; and the performing, by the UE, uplink random access according to the $k^{th}$ available root sequence of the K available root sequences comprises:

performing, by the UE, uplink random access according to the $k^{th}$ available root sequence of the K available root sequences or the $n^{th}$ cyclic shift sequence of the $k^{th}$ available root sequence.

20. The method according to claim 19, wherein $a$ is prestored by the UE or is sent by the base station to the UE.

21. The method according to claim 19 or 20, wherein the start location of the $n^{th}$ cyclic shift sequence is obtained through calculation by using the following steps:

obtaining, by the UE, a start location of a detection window of the $n^{th}$ cyclic shift sequence according to a first formula, wherein the first formula comprises:

$$d_{start,n1} = (d_{start,n} + m \times d_u) \bmod N_{ZC} ;$$

obtaining, by the UE, an end location of the detection window of the $n^{th}$ cyclic shift sequence according to a second formula, wherein the second formula comprises:

$$d_{start,n2} = (d_{start,n} + m \times d_u + N_{CS} - 1) \bmod N_{ZC} ,$$

wherein

$$d_{start,1} = 0 ; \quad d_{start,n} = d_{start,n-1} + N_{CS} ; \quad d_u = \{ \begin{array}{ll} p & 0 \le p \le N_{ZC}/2 \\ N_{ZC} - p & \text{others} \end{array} ;$$

P is a minimum non-negative integer satisfying $(p \times u) \bmod N_{ZC}=1$; $d_u$ indicates an offset of a peak generated when a subcarrier is shifted; $N_{ZC}$ indicates a length of an uplink access root sequence; $N_{CS}$ indicates a length of an uplink detection window; $d_{start,n1}$ indicates the start location of the detection window of the nth cyclic shift sequence; and $d_{start,n2}$ indicates the end location of the detection window of the nth cyclic shift sequence; determining, by the UE for any $d_{start,l} \in \nu$, whether a detection window corresponding to $d_{start,n}$ and a detection window corresponding to $d_{start,l}$ overlap, wherein $\nu$ indicates a set of start locations of detection windows, and an initial set of $\nu$ is $\nu = \{d_{start,1}\}$;

if the detection window corresponding to $d_{start,n}$ and the detection window corresponding to $d_{start,l}$ do not overlap, determining, by the UE, that the start location of the nth cyclic shift sequence is $d_{start,n}$ and adding $d_{start,n}$ to $\nu$; and

if the detection window corresponding to $d_{start,n}$ and the detection window corresponding to $d_{start,l}$ overlap, assuming $d_{start,n} = d_{start,n}+1$ and repeatedly performing, by the UE, the foregoing steps until $d_{start,n} \geq N_{ZC}-N_{CS}$.

22. The method according to claim 21, wherein a configuration parameter is prestored by the UE or is sent by the base station to the UE, wherein the configuration parameter comprises at least one of the following parameters: M, $N_{ZC}$, or $N_{CS}$.

23. The method according to any one of claims 17 to 22, wherein before the performing, by the UE, uplink random access according to the kth available root sequence of the K available root sequences, the method further comprises:

receiving, by the UE, a physical random access channel PRACH time-frequency resource sent by the base station, wherein the PRACH time-frequency resource and a PRACH time-frequency resource that is configured by the base station for the UE when M=1 are configured independently; and
the performing, by the UE, uplink random access according to the kth available root sequence of the K available root sequences comprises:

performing, by the UE, uplink random access on the PRACH according to the kth available root sequence of the K available root sequences.

24. The method according to any one of claims 17 to 23, wherein after the determining, by UE, K available root sequences for uplink random access according to a preset policy and before the performing, by the UE, uplink random access according to the kth available root sequence of the K available root sequences, the method further comprises:

receiving, by the UE, a sequence number of an initial sequence and a quantity Q of random access sequences supported by a cellular that are sent by the base station, wherein $Q \geq 1$ and Q is an integer; and
determining, by the UE, an initial available root sequence in the K available root sequences according to the sequence number; and
the performing, by the UE, uplink random access according to the kth available root sequence of the K available root sequences comprises:

performing, by the UE, uplink random access according to the initial available root sequence or any available root sequence of Q-1 available sequences after the initial available root sequence.

25. An uplink random access method, wherein the method comprises:

determining, by a base station, K available root sequences for uplink random access according to a preset policy, wherein a maximum quantity of detection windows of single UE that can be supported by each of the K available root sequences is 2M+1, and maximum detection windows of the single UE that can be supported by each available root sequence do not overlap with each other, wherein $K \geq 1$, M is a detection window parameter, M>1, and both K and M are integers; and
performing, by the base station, uplink random access detection according to the kth available root sequence of the K available root sequences, wherein $1 \leq k \leq K$ and k is an integer.

26. The method according to claim 25, wherein the preset policy comprises:

a root sequence satisfying none of the following condition A, condition B, and condition C is an available root sequence:

the condition A: any detection window $m \in \{-M,...,0,...,M\}$ of the single UE satisfies:

$$(m \times d_u + N_{CS} - 1) \bmod N_{ZC} < (m \times d_u) \bmod N_{ZC} \; ;$$

the condition B: any detection windows $m_a$ and $m_b$ of the single UE, wherein $m_a{\neq}m_b$ and $m_a,m_b{\in}\{-M,...,0,...,M\}$, satisfy:

$$(m_a \times d_u) \bmod N_{ZC} \leq (m_b \times d_u) \bmod N_{ZC} \; ,$$

and

$$(m_a \times d_u + N_{CS} - 1) \bmod N_{ZC} \geq (m_b \times d_u) \bmod N_{ZC} \; ;$$

and
the condition C: any detection windows $m_a$ and $m_b$ of the single UE, wherein $m_a{\neq}m_b$ and $m_a,m_b{\in}\{-M,...,0,...,M\}$, satisfy:

$$(m_b \times d_u + N_{CS} - 1) \bmod N_{ZC} \geq (m_a \times d_u) \bmod N_{ZC} \; ,$$

and

$$(m_b \times d_u + N_{CS} - 1) \bmod N_{ZC} \leq (m_a \times d_u + N_{CS} - 1) \bmod N_{ZC} \; ,$$

wherein

$$d_u = \begin{cases} p & 0 \leq p \leq N_{ZC}/2 \\ N_{ZC} - p & \text{others} \end{cases} \; ;$$

$p$ is a minimum non-negative integer satisfying $(p{\times}u) \bmod N_{ZC}=1$; $u$ indicates a root sequence generation parameter; a root sequence is $x_u(n) = e^{\frac{-jun(n+1)}{N_{ZC}}}$ ; $d_u$ indicates an offset of a peak generated when a subcarrier is shifted; $N_{ZC}$ indicates a length of an uplink access root sequence; $N_{CS}$ indicates a length of an uplink detection window; 2M+1 indicates the maximum quantity of detection windows of the single UE that can be supported by the available root sequence; $m$, $m_a$, and $m_b$ indicate any detection windows of the single UE; and mod indicates a modulo operation.

27. The method according to claim 25 or 26, wherein after the determining, by a base station, K available root sequences for uplink random access according to a preset policy, the method further comprises:

determining, by the base station, start locations of cyclic shift sequences of the K available root sequences, wherein the start locations of the cyclic shift sequences of the K available root sequences comprise start locations of N cyclic shift sequences of the $k^{th}$ available root sequence, the start locations of the N cyclic shift sequences comprise a start location of the $n^{th}$ cyclic shift sequence, and N$\times$(2M+1) detection windows corresponding to the start locations of the N cyclic shift sequences do not overlap with each other, wherein $1{\leq}n{\leq}N$, N${\geq}1$, N indicates a quantity of cyclic shift sequences of the $k^{th}$ available root sequence, and both n and N are integers; and performing, by the base station, cyclic shift on the $k^{th}$ available root sequence according to the start location of the $n^{th}$ cyclic shift sequence, to obtain the $n^{th}$ cyclic shift sequence of the $k^{th}$ available root sequence, wherein magnitude of the cyclic shift is $(d_{start,n}+a) \bmod N_{ZC}$; $d_{start,n}$ is the start location of the $n^{th}$ cyclic shift sequence; $N_{ZC}$ indicates a length of an uplink access root sequence; mod indicates a modulo operation; and $a$ is a preset integer value; and
the performing, by the base station, uplink random access detection according to the $k^{th}$ available root sequence of the K available root sequences comprises:

> performing, by the base station, uplink random access detection according to the kth available root sequence of the K available root sequences or the nth cyclic shift sequence of the kth available root sequence.

28. The method according to claim 27, wherein the start location of the nth cyclic shift sequence is obtained through calculation by using the following steps:

> obtaining, by the UE, a start location of a detection window of the nth cyclic shift sequence according to a first formula, wherein the first formula comprises:

$$d_{start,n1} = (d_{start,n} + m \times d_u) \bmod N_{ZC} ;$$

> obtaining, by the UE, an end location of the detection window of the nth cyclic shift sequence according to a second formula, wherein the second formula comprises:

$$d_{start,n2} = (d_{start,n} + m \times d_u + N_{CS} - 1) \bmod N_{ZC} ,$$

> wherein

$$d_{start,1} = 0 ; \quad d_{start,n} = d_{start,n-1} + N_{CS} ; \quad d_u = \{ \begin{matrix} p & 0 \le p \le N_{ZC}/2 \\ N_{ZC} - p & \text{others} \end{matrix} ;$$

$p$ is a minimum non-negative integer satisfying $(p \times u) \bmod N_{ZC} = 1$; $d_u$ indicates an offset of a peak generated when a subcarrier is shifted; $N_{ZC}$ indicates a length of an uplink access root sequence; $N_{CS}$ indicates a length of an uplink detection window; $d_{start,n1}$ indicates the start location of the detection window of the nth cyclic shift sequence; and $d_{start,n2}$ indicates the end location of the detection window of the nth cyclic shift sequence; determining, by the UE for any $d_{start,l} \in v$, whether a detection window corresponding to $d_{start,n}$ and a detection window corresponding to $d_{start,l}$ overlap, wherein $v$ indicates a set of start locations of detection windows, and an initial set of $v$ is $v = \{d_{start,1}\}$; if the detection window corresponding to $d_{start,n}$ and the detection window corresponding to $d_{start,l}$ do not overlap, determining, by the UE, that the start location of the nth cyclic shift sequence is $d_{start,n}$ and adding $d_{start,n}$ to v; and if the detection window corresponding to $d_{start,n}$ and the detection window corresponding to $d_{start,l}$ overlap, assuming $d_{start,n} = d_{start,n} + 1$ and repeatedly performing, by the UE, the foregoing steps until $d_{start,n} \ge N_{ZC} - N_{CS}$.

29. The method according to any one of claims 25 to 28, wherein before the performing, by the base station, uplink random access detection according to the kth available root sequence of the K available root sequences, the method further comprises:

> sending, by the base station, a physical random access channel PRACH time-frequency resource to user equipment UE, wherein the PRACH time-frequency resource and a PRACH time-frequency resource that is configured by the base station for the UE when M=1 are configured independently; and
> the performing, by the base station, uplink random access detection according to the kth available root sequence of the K available root sequences comprises:

> > performing, by the base station, uplink random access detection on the PRACH according to the kth available root sequence of the K available root sequences.

30. The method according to any one of claims 25 to 29, wherein after the determining, by a base station, K available root sequences for uplink random access according to a preset policy and before the performing, by the base station, uplink random access detection according to the kth available root sequence of the K available root sequences, the method further comprises:

sending, by the base station, a sequence number of an initial sequence and a quantity Q of random access sequences supported by a cellular to the UE, wherein Q≥1 and Q is an integer; and

determining, by the base station, an initial available root sequence in the K available root sequences according to the sequence number; and

the performing, by the base station, uplink random access detection according to the $k^{th}$ available root sequence of the K available root sequences comprises:

performing, by the base station, uplink random access detection according to the initial available root sequence or any one of Q-1 available root sequences after the initial available root sequence.

31. The method according to any one of claims 25 to 29, wherein after the determining, by a base station, K available root sequences for uplink random access according to a preset policy and before the performing, by the base station, uplink random access detection according to the $k^{th}$ available root sequence of the K available root sequences, the method further comprises:

determining, by the base station, whether Q consecutive available root sequences exist in the K available root sequences, wherein Q is a quantity of random access sequences supported by a cellular, 1≤Q≤K, and Q is an integer; and

if the Q consecutive available root sequences exist, sending, by the base station, a sequence number of an initial available root sequence and a configuration message to the UE, wherein the sequence number of the initial available root sequence is a sequence number of the first available root sequence of the Q consecutive available root sequences, and the configuration message is used to indicate that $N_{CS}$ supports a non-limited set and $N_{CS}$ is configured to 0, wherein $N_{CS}$ indicates a length of an uplink detection window.

32. An uplink random access method, wherein the method comprises:

receiving, by user equipment UE, a sequence number of an initial available root sequence and a configuration message that are sent by a base station, wherein a maximum quantity of detection windows of single UE that can be supported by the initial available root sequence is 2M+1, maximum detection windows of the single UE that can be supported by the initial available root sequence do not overlap with each other, and the configuration message is used to indicate that $N_{CS}$ supports a non-limited set and $N_{CS}$ is configured to 0, wherein $N_{CS}$ indicates a length of an uplink detection window, M is a detection window parameter, M>1, and M is an integer; and

performing, by the UE according to the sequence number and the configuration message, random access on the initial available root sequence or any available root sequence of Q-1 consecutive root sequences after the initial available root sequence, wherein a maximum quantity of detection windows of the single UE that can be supported by any one of the Q-1 root sequences is 2M+1, and maximum detection windows of the single UE that can be supported by any one of the Q-1 root sequences do not overlap with each other, wherein Q is a quantity of random access sequences supported by a cellular, Q≥1, and Q is an integer.

UE determines K available root sequences for uplink random access according to a preset policy, where a maximum quantity of detection windows of single UE that can be supported by each of the K available root sequences is 2M+1, and maximum detection windows of the single user that can be supported by each available root sequence do not overlap with each other

101

The UE performs uplink random access according to the $k^{th}$ available root sequence of the K available root sequences

102

FIG. 1

UE determines K available root sequences for uplink random access according to a preset policy, where a maximum quantity of detection windows of single UE that can be supported by each of the K available root sequences is 2M+1, and maximum detection windows of the single user that can be supported by each available root sequence do not overlap with each other

101

The UE determines start locations of cyclic shift sequences of the K available root sequences, where the start locations of the cyclic shift sequences of the K available root sequences include start locations of N cyclic shift sequences of the $k^{th}$ available root sequence, the start locations of the N cyclic shift sequences include a start location of the $n^{th}$ cyclic shift sequence, and detection windows corresponding to the start locations of the N cyclic shift sequences do not overlap with each other

103

The UE performs cyclic shift on the $k^{th}$ available root sequence according to the start location of the $n^{th}$ cyclic shift sequence, to obtain the $n^{th}$ cyclic shift sequence of the $k^{th}$ available root sequence, where magnitude of the cyclic shift is $(d_{start,n} + a) \bmod N_{ZC}$ ; and $a$ is a preset integer value

104

The UE performs uplink random access according to the $k^{th}$ available root sequence of the K available root sequences or the $n^{th}$ cyclic shift sequence of the $k^{th}$ available root sequence

102a

FIG. 2

UE determines K available root sequences for uplink random access according to a preset policy, where a maximum quantity of detection windows of single UE that can be supported by each of the K available root sequences is 2M+1, and maximum detection windows of the single user that can be supported by each available root sequence do not overlap with each other — 101

The UE receives a PRACH time-frequency resource sent by a base station, where the PRACH time-frequency resource and a PRACH time-frequency resource that is configured by the base station for the UE when M=1 are configured independently — 105

The UE performs uplink random access on the PRACH resource according to the k$^{th}$ available root sequence of the K available root sequences — 102b

FIG. 3

UE determines K available root sequences for uplink random access according to a preset policy, where a maximum quantity of detection windows of single UE that can be supported by each of the K available root sequences is 2M+1, and maximum detection windows of the single user that can be supported by each available root sequence do not overlap with each other — 101

The UE receives a sequence number of an initial sequence and a quantity Q of random access sequences supported by a cellular that are sent by a base station — 106

The UE determines an initial available root sequence in the K available root sequences according to the sequence number — 107

The UE performs uplink random access according to the initial available root sequence or any available root sequence of Q–1 available sequences after the initial available root sequence — 102c

FIG. 4

UE receives a sequence number of an initial available root sequence and a configuration message that are sent by a base station, where a maximum quantity of detection windows of single UE that can be supported by the initial available root sequence is 2M+1, maximum detection windows of the single UE that can be supported by the initial available root sequence do not overlap with each other, and the configuration message is used to indicate that $N_{CS}$ supports a non-limited set and $N_{CS}$ is configured to 0

501

The UE performs, according to the sequence number and the configuration message, random access on the initial available root sequence or any available root sequence of Q–1 consecutive root sequences after the initial available root sequence, where a maximum quantity of detection windows of the single UE that can be supported by any one of the Q–1 root sequences is 2M+1, and maximum detection windows of the single UE that can be supported by any one of the Q–1 root sequences do not overlap with each other, where Q is a quantity of random access sequences supported by a cellular

502

FIG. 5

A base station determines K available root sequences for uplink random access according to a preset policy, where a maximum quantity of detection windows of single UE that can be supported by each of the K available root sequences is 2M+1, and maximum detection windows of the single user that can be supported by each available root sequence do not overlap with each other

601

The base station performs uplink random access detection according to the $k^{th}$ available root sequence of the K available root sequences

602

FIG. 6

A base station determines K available root sequences for uplink random access according to a preset policy, where a maximum quantity of detection windows of single UE that can be supported by each of the K available root sequences is 2M+1, and maximum detection windows of the single user that can be supported by each available root sequence do not overlap with each other

601

The base station determines start locations of cyclic shift sequences of the K available root sequences, where the start locations of the cyclic shift sequences of the K available root sequences include start locations of N cyclic shift sequences of the k$^{th}$ available root sequence, the start locations of the N cyclic shift sequences include a start location of the n$^{th}$ cyclic shift sequence, and N$\times$(2M+1) detection windows corresponding to the start locations of the N cyclic shift sequences do not overlap with each other

603

The base station performs cyclic shift on the k$^{th}$ available root sequence according to the start location of the n$^{th}$ cyclic shift sequence, to obtain the n$^{th}$ cyclic shift sequence of the k$^{th}$ available root sequence, where magnitude of the cyclic shift is $(d_{start,n} + a) \bmod N_{ZC}$ ; and $a$ is a preset integer value

604

The base station performs uplink random access detection according to the k$^{th}$ available root sequence of the K available root sequences or the n$^{th}$ cyclic shift sequence of the k$^{th}$ available root sequence

602a

FIG. 7

A base station determines K available root sequences for uplink random access according to a preset policy, where a maximum quantity of detection windows of single UE that can be supported by each of the K available root sequences is 2M+1, and maximum detection windows of the single user that can be supported by each available root sequence do not overlap with each other

601

The base station sends a PRACH time-frequency resource to UE, where the PRACH time-frequency resource and a PRACH time-frequency resource that is configured by the base station for the UE when M=1 are configured independently

605

The base station performs uplink random access detection on the PRACH resource according to the $k^{th}$ available root sequence of the K available root sequences

602b

FIG. 8

A base station determines K available root sequences for uplink random access according to a preset policy, where a maximum quantity of detection windows of single UE that can be supported by each of the K available root sequences is 2M+1, and maximum detection windows of the single user that can be supported by each available root sequence do not overlap with each other

601

The base station determines whether Q consecutive available root sequences exist in the K available root sequences, where Q is a quantity of random access sequences supported by a cellular

606

If the Q consecutive available root sequences exist, the base station sends a sequence number of an initial available root sequence and a configuration message to UE, where the sequence number of the initial available root sequence is a sequence number of a first available root sequence of the Q consecutive available root sequences, and the configuration message is used to indicate that $N_{CS}$ supports a non-limited set and $N_{CS}$ is configured to 0

607

The base station performs uplink random access detection according to a $k^{th}$ available root sequence of the K available root sequences

602

FIG. 9

A base station determines K available root sequences for uplink random access according to a preset policy, where a maximum quantity of detection windows of single UE that can be supported by each of the K available root sequences is 2M+1, and maximum detection windows of the single user that can be supported by each available root sequence do not overlap with each other

601

The base station sends a sequence number of an initial sequence and a quantity Q of random access sequences supported by a cellular to UE

606

The base station determines an initial available root sequence in the K available root sequences according to the sequence number

607

The base station performs uplink random access detection according to the initial available root sequence or any one of Q–1 available root sequences after the initial available root sequence

602c

FIG. 10

```
+--------------------------------------------+  110
|                    UE                      |
|   +------------------------------+  1101   |
|   |     Determining unit         |         |
|   +------------------------------+         |
|                |                           |
|   +------------------------------+  1102   |
|   |        Access unit           |         |
|   +------------------------------+         |
+--------------------------------------------+
```

FIG. 11

```
+--------------------------------------------+  110
|                    UE                      |
|   +------------------------------+  1103   |
|   |     Generation unit          |         |
|   +------------------------------+         |
|                |                           |
|   +------------------------------+  1101   |
|   |     Determining unit         |         |
|   +------------------------------+         |
|                |                           |
|   +------------------------------+  1102   |
|   |        Access unit           |         |
|   +------------------------------+         |
+--------------------------------------------+
```

FIG. 12

```
+--------------------------------------------+  110
|                    UE                      |
|   +------------------------------+  1104   |
|   |      Receiving unit          |         |
|   +------------------------------+         |
|                |                           |
|   +------------------------------+  1101   |
|   |     Determining unit         |         |
|   +------------------------------+         |
|                |                           |
|   +------------------------------+  1102   |
|   |        Access unit           |         |
|   +------------------------------+         |
+--------------------------------------------+
```

FIG. 13

FIG. 14

FIG. 15

FIG. 16

Base station 150

Sending unit 1504

Determining unit 1501

Detection unit 1502

FIG. 17

Base station 150

Sending unit 1504

Determining unit 1501

Detection unit 1502

FIG. 18

UE 190

Receiving unit 1901

Access unit 1902

FIG. 19

Uplink random access system

200

—110

—150

UE

Base station

FIG. 20

Uplink random access system

210

—190

—150

UE

Base station

FIG. 21

## INTERNATIONAL SEARCH REPORT

| International application No. |
|---|
| **PCT/CN2015/077445** |

**A. CLASSIFICATION OF SUBJECT MATTER**

H04W 74/08 (2009.01) i; H04L 25/08 (2006.01) i

According to International Patent Classification (IPC) or to both national classification and IPC

**B. FIELDS SEARCHED**

Minimum documentation searched (classification system followed by classification symbols)

H04W, H04L

Documentation searched other than minimum documentation to the extent that such documents are included in the fields searched

Electronic data base consulted during the international search (name of data base and, where practicable, search terms used)

CNABS; CNTXT; CNKI; VEN: ZC sequence; RANDOM ACCESS, ROOT SEQUENCE, SEQUENCE, DETECT+, WINDOW, OVERLAP, CYCLIC SHIFT, INITIATE, PRACH, ZC

**C. DOCUMENTS CONSIDERED TO BE RELEVANT**

| Category* | Citation of document, with indication, where appropriate, of the relevant passages | Relevant to claim No. |
|---|---|---|
| X | CN 103581944 A (HUAWEI TECHNOLOGIES CO., LTD.), 12 February 2014 (12.02.2014), description, paragraphs 20-62, and figure 1 | 1, 7, 9, 13, 17, 23, 25, 29 |
| A | CN 101601221 A (NOKIA CORPORATION), 09 December 2009 (09.12.2009), the whole document | 1-32 |
| A | CN 102316601 A (BEIJING NORTHERN FIBERHOME TECHNOLOGIES CO., LTD.), 11 January 2012 (11.01.2012), the whole document | 1-32 |
| A | CN 103929825 A (UNIVERSITY OF ELECTRONIC SCIENCE AND TECHNOLOGY OF CHINA), 16 July 2014 (16.07.2014), the whole document | 1-32 |
| A | CN 101583196 A (NOKIA CORPORATION), 18 November 2009 (18.11.2009), the whole document | 1-32 |
| A | US 2015023329 A1 (TEXAS INSTRUMENTS INCORPORATED), 22 January 2015 (22.01.2015), the whole document | 1-32 |

☐ Further documents are listed in the continuation of Box C.     ☒ See patent family annex.

| *   Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 January 2016 (20.01.2016) | **02 February 2016 (02.02.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **DING, Ling** Telephone No.: (86-10) **62411483** |
|---|---|

Form PCT/ISA/210 (second sheet) (July 2009)

## INTERNATIONAL SEARCH REPORT
### Information on patent family members

International application No.

**PCT/CN2015/077445**

| Patent Documents referred in the Report | Publication Date | Patent Family | Publication Date |
|---|---|---|---|
| CN 103581944 A | 12 February 2014 | US 2015131426 A1 | 14 May 2015 |
| | | WO 2014023125 A1 | 13 February 2014 |
| | | JP 2015530013 A | 08 October 2015 |
| | | EP 2866512 A4 | 15 July 2015 |
| | | EP 2866512 A1 | 29 April 2015 |
| CN 101601221 A | 09 December 2009 | WO 2008081311 A2 | 10 July 2008 |
| | | AT 535072 T | 15 December 2011 |
| | | WO 2008081311 A3 | 11 June 2009 |
| | | HK 1133346 A1 | 28 March 2013 |
| | | EP 2100402 A2 | 16 September 2009 |
| | | JP 4934727 B2 | 16 May 2012 |
| | | KR 101087892 B1 | 30 November 2011 |
| | | KR 20090106404 A | 08 October 2009 |
| | | US 8681750 B2 | 25 March 2014 |
| | | US 2010220664 A1 | 02 September 2010 |
| | | DK 2100402 T3 | 05 March 2012 |
| | | JP 2010515327 A | 06 May 2010 |
| | | CN 101601221 B | 13 June 2012 |
| | | MY 151522 A | 30 May 2014 |
| | | EP 2100402 B1 | 23 November 2011 |
| CN 102316601 A | 11 January 2012 | CN 102316601 B | 07 May 2014 |
| CN 103929825 A | 16 July 2014 | None | |
| CN 101583196 A | 18 November 2009 | US 2009303896 A1 | 10 December 2009 |
| | | CN 101583196 B | 14 November 2012 |
| | | US 8111656 B2 | 07 February 2012 |
| US 2015023329 A1 | 22 January 2015 | WO 2015013310 A1 | 29 January 2015 |